# EUROPEAN PATENT APPLICATION

(11) **EP 2 998 842 A1**
(43) Date of publication of application: **23.03.2016**
(21) Application number: 14838891.1
(22) Date of filing: 25.07.2014
(51) Int. Cl.: G06F 3/046, G06F 3/041

(54) **POSITION DETECTION UNIT**

(71) Applicant: Newcom Techno Inc., Chiyoda-ku, Tokyo 101-0021 (JP)
(72) Inventor: TAHARA Kenji, Kuki-shi Saitama 340-0203 (JP)
(74) Representative: D Young & Co LLP
(86) International application number: PCT/JP2014/069668
(87) International publication number: WO 2016/013105

(57) **Abstract**

[Problem] To provide a position detection unit having considerably more flexibility.

[Solution] A position detection unit comprising: an XY coordinate formation section having a configuration in which X-axis line bodies composed of a plurality of line bodies and Y-axis line bodies composed of a plurality of line bodies are caused to intersect each other; a drive signal input section for inputting drive input signals to one end side of the plurality of Y-axis line bodies, the drive signal input section being provided to one end side of the plurality of Y-axis line bodies; and a position detection signal output section for outputting a position detection signal corresponding to a designated coordinate position when a position designation tool has designated an XY coordinate position of the XY coordinate formation section, the position detection signal output section being provided to one end side of the plurality of X-axis line bodies;

## Description

### TECHNICAL FIELD

The present invention relates to a position detection unit capable of being used in a terminal device provided with a display surface on which, e.g., a touch panel has been superimposed.

### BACKGROUND ART

A terminal device having a display surface on which a touch panel has been superimposed is widely used as means in which a user designates a specific display position on the display surface, whereby processing of information corresponding to the display position can be executed in a simple manner.

Conventionally, in this type of terminal device, there has been proposed a position detection unit having an electromagnetic induction scheme as detection means for detecting a position designated by the user on a tablet display surface, wherein a position-designating member housing a parallel resonance circuit, a magnetic body, or the like is brought into proximity to a display surface where several loop coils are disposed in the display surface, whereby the proximate coordinate position is detected as the position designated by the user (Patent Reference 1).

### PRIOR ART REFERENCES

### PATENT REFERENCES

Patent Reference 1: Japanese Laid-Open Patent Application 07-044304

### SUMMARY OF THE INVENTION

### PROBLEMS TO BE SOLVED BY THE INVENTION

However, in the convention configuration disclosed in Patent Reference 1, loop coils formed by mutually parallel conductors are arranged so as to be mutually superimposed. Therefore, implementing such an arrangement requires, e.g., the use of a printed circuit board provided with through-holes and wiring on both sides, and has various other restrictions in terms of the configuration of the position detection unit.

In view of the above, a position detection unit having considerably more flexibility is provided by the various embodiments of the present invention.

### MEANS USED TO SOLVE THE ABOVE-MENTIONED PROBLEMS

The position detection unit according to an aspect of the present invention comprises: an XY coordinate formation section having a configuration in which a plurality of X-axis line bodies composed of line bodies and a plurality of Y-axis line bodies composed of line bodies are caused to intersect each other; a drive signal input section for inputting drive input signals to one end side of the plurality of Y-axis line bodies, the drive signal input section being provided to one end side of the plurality of Y-axis line bodies; and a position detection signal output section for outputting a position detection signal corresponding to a designated coordinate position if a position designation tool has designated an XY coordinate position of the XY coordinate formation section, the position detection signal output section being provided to one end side of the plurality of X-axis line bodies; wherein the plurality of Y-axis line bodies has one end connected to the drive signal input section and another end short-circuited; and the drive signal input section comprises a Y-axis line body selection section for selecting at least two Y-axis line bodies for forming an input loop coil from the plurality of Y-axis line bodies.

The terminal device according to another aspect of the present invention comprises a position detection unit according to the above; and a central processing unit for processing information on the basis of a position detection signal outputted from the position detection unit.

A position detection unit having considerably more flexibility is provided by the various embodiments of the present invention.

### BRIEF DESCRIPTION OF THE DRAWINGS

[FIG. 1] FIG. 1 is a schematic view of the terminal device 1 according to a first embodiment of the present invention.
[FIG. 2] FIG. 2 is a block view showing the configuration of the terminal device 1 of FIG. 1.
[FIG. 3] FIG. 3 is an electrical connections diagram showing the specific configuration of the position detection unit 10 of FIG. 2.
[FIG. 4] FIG. 4 is a conceptual view showing a switch management table provided inside the designated-position detection control section 16.
[FIG. 5] FIG. 5 is a conceptual view showing a switch management table provided inside the designated-position detection control section 16.
[FIG. 6] FIG. 6 is a conceptual view of input loop coils formed by the position detection unit 10 of FIG. 2.
[FIG. 7] FIG. 7 is a conceptual view showing a switch management table provided inside the designated-position detection control section 16.
[FIG. 8] FIG. 8 is a conceptual view showing a switch management table provided inside the designated-position detection control section 16.
[FIG. 9] FIG. 9 is a processing flowchart for the case in which a plurality of switch management tables is used.
[FIG. 10] FIG. 10 is a view showing the specific structure of the Y-axis line section 12 constituting the XY coordinate formation section according to the first embodiment.
[FIG. 11] FIG. 11(a) is a view schematically showing the end part of a conventional Y-axis line section. FIG. 11(b) is a view schematically showing a partial cross section of the end part of a conventional Y-axis line section.
[FIG. 12] FIG. 12 is a view schematically showing the structure of the end part of a Y-axis line body constituting the Y-axis line section according to the first embodiment.
[FIG. 13] FIG. 13 is a block view showing the configuration of a terminal device 100 according to the second embodiment.
[FIG. 14] FIG. 14 is an electrical connection diagram showing the specific configuration of the position detection unit 110 of FIG. 13.
[FIG. 15] FIG. 15 is a conceptual view showing a switch management table provided inside the designated-position detection control section 116.
[FIG. 16] FIG. 16 is a conceptual view showing a switch management table provided inside the designated-position detection control section 116.
[FIG. 17] FIG. 17 is a conceptual view of input loop coils formed by the position detection unit 110 of FIG. 13.
[FIG. 18] FIG. 18 is a conceptual view of X, Y axes formed by the position detection unit 110 of FIG. 13.
[FIG. 19] FIG. 19 is a view showing the specific structure of the Y-axis line section 112 constituting the XY coordinate formation section according to the second embodiment.
[FIG. 20] FIG. 20 is a view showing the specific structure of the Y-axis line section 112 constituting the XY coordinate formation section according to the second embodiment.
[FIG. 21] FIG. 21 is a view showing the specific structure of the X-axis line section 111 and the Y-axis line section 112 constituting the XY coordinate formation section according to the second embodiment.
[FIG. 22] FIG. 22 is a block view showing the configuration of a terminal device 200 according to the third embodiment of the present invention.
[FIG. 23] FIG. 23 is an electrical connection diagram showing the specific configuration of the position detection unit 210 of FIG. 22.
[FIG. 24] FIG. 24 is a conceptual view of the X, Y axes formed by the position detection unit 210 of FIG. 22.
[FIG. 25] FIG. 25 is a view showing the specific structure of the Y-axis line section 212 constituting the XY coordinate formation section according to the third embodiment.

### MODE FOR CARRYING OUT THE INVENTION

Embodiments of the present invention will be described with reference to the attached drawings. The same reference symbols are used for shared constituent elements in the drawings.

### <Overview of the first embodiment of the present invention>

A terminal device 1 provided with a display surface on which the position designation detection device according to the present embodiment has been superimposed will be described as the terminal device according to the first embodiment of the present invention. In the present embodiment, a smartphone will be described as an example of the terminal device 1, but as shall be apparent, no limitation is imposed thereby. Examples of a terminal device include a tablet-type mobile terminal, a mobile telephone, a PDA, a mobile game machine, a laptop computer, a desktop computer, various business terminals (registers, ATM terminals, ticket vending machines, and the like), a handwritten signature authentication terminal, and a large display device for electronic advertising. In the present embodiment, a terminal device in which a position detection unit 10 is provided in superimposed fashion to the position detection unit display section 30, but as shall be apparent, no limitation is imposed thereby. For example, it is possible to apply the position detection unit 10 according to the present embodiment to a terminal device in which a display section 30 is not provided or in which a separately provided display section is connected and used, such as in a digitizer-dedicated tablet.

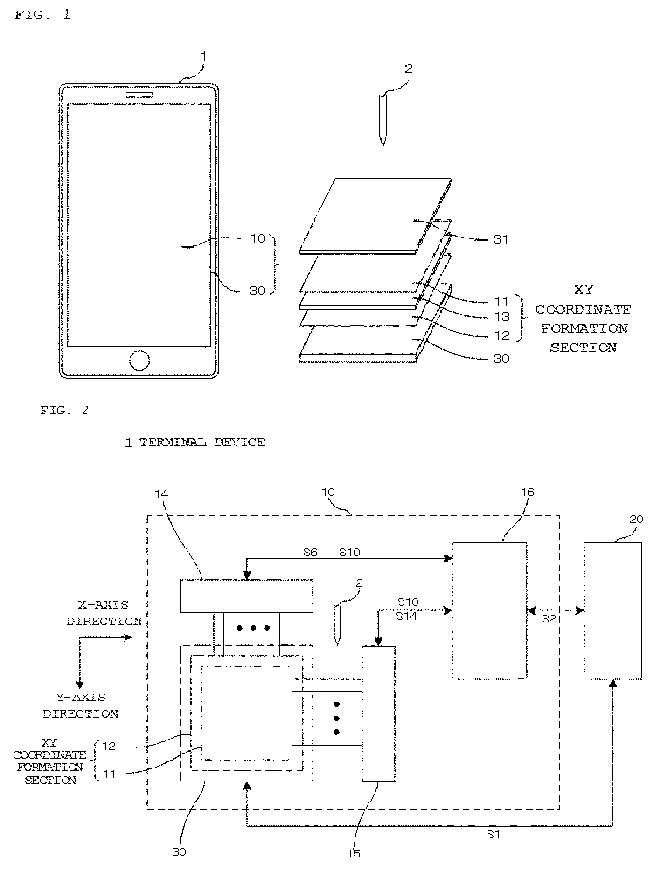

FIG. 1 is a schematic view of the terminal device 1 according to a first embodiment of the present invention. In FIG. 1, the terminal device 1 according to the present embodiment comprises at least a position detection unit 10 and a display section 30. Described more specifically, the position detection unit 10 and the display section 30 comprise a Y-axis line section 12 disposed on the display section 30, an insulating layer 13 disposed on the Y-axis line section 12, an X-axis line section 11 disposed on the insulating layer 13, and a protective layer section 31 for covering the display section 30 and the position detection unit 10. An XY coordinate formation section is composed of the Y-axis line section 12, the insulating layer 13, and the X-axis line section 11, and the contact and proximity operation position of the user are detected as an XY coordinate position on the operation display surface of the protective layer section 31.

In the present embodiment, the user reads an information display projected on the display section 30 from the protective layer section 31 side, and is able to designate a specific information display element by using a position designation tool 2 having a pen shape that can be grasped by the user.

In the present embodiment, the XY coordinate formation section constituting the position detection unit 10 is composed of transparent electrodes or the like in order to describe an example in which the XY coordinate formation section is provided in a superimposed fashion on the upper surface of the display section 30. However, the position detection unit 10 according to the present embodiment may as shall be apparent be implemented as an embedded touch panel sensor in which the XY coordinate formation section constituting the position detection unit 10 is provided to the lower surface of the display section 30. It is also possible to apply the position detection unit 10 to a terminal device in which a display section 30 is not provided or in which a separately provided display section is connected and used, such as in a digitizer-dedicated tablet, or to an electronic blackboard or other terminal device. In such cases, the XY coordinate formation section constituting the position detection unit 10 is not necessarily required to be composed of transparent electrodes or the like.

In the present embodiment, a stylus pen having a pen shape will be described as the position designation tool 2. However, the position designation tool 2 is not limited to being a pen shape and is as shall be apparent not limited to being a stylus pen as long as the designated XY coordinate position can be detected by the position detection unit 10 according to the present embodiment.

FIG. 2 is a block view showing the configuration of the terminal device 1 according to the first embodiment of the present invention. In FIG. 2, the terminal device 1 according to the present embodiment comprises at least a position detection unit 10, a central processing unit 20, and a display section 30. The configuration may also have, as required: a storage section composed of ROM, RAM, nonvolatile memory, or the like; an antenna and wireless communication processing section for connecting to a remotely disposed terminal in a manner that allows wireless communication; and various connector sections for connecting with priority to other terminal devices. In other words, FIG. 2 shows the configuration of the terminal device 1 according to the first embodiment of the present invention, but the terminal device 1 is not required to be provided with all of the constituent elements shown herein, and the configuration made omitted a portion thereof. Also, the terminal device 1 may comprise constituent elements other than those shown herein.

The position detection unit 10 is disposed on the upper surface of the display section 30, and comprises the Y-axis line section 12, the X-axis line section 11, and the insulating layer 13. It is possible to use a known substrate material as the insulating layer 13, but in the present embodiment, a printed circuit board provided with through-holes and wiring on both sides is not required to be used, and it is therefore possible for the insulating layer to be composed of polyethylene terephthalate (PET), polycarbonate (PC), or other transparent film material. The specific details of the position detection unit 10, including the X-axis line section 11 and the Y-axis line section 12, are later described.

The central processing unit 20 exchanges an information display signal Sl with the display section 30. The central processing unit 20 also receives from the designated-position detection control unit 16 a display position detection signal S2 showing a designated position when a user has designated a specific position on the XY display surface of the display section 30 by performing an operation in which the pen-shaped position designation tool 2 is brought into contact with or proximity to the display surface of the display section 30 (hereinafter referred to as a "pen touch operation"). The central processing unit 20 is thereby made to process a variety of information.

The display section 30 displays information on the basis of the information display signal S1 generated by the central processing unit 20 on the basis of, e.g., image information stored in the storage unit (not shown). For example, the display section 30 is composed of a liquid crystal display, and is provided with a protective layer section 31 on the topmost surface with the position detection unit 10 therebetween. The protective layer section 31 is composed of, e.g., glass.

### <Position detection unit 10>

In the present embodiment, the position detection unit 10 comprises: the designated-position detection control section 16; the XY coordinate formation section composed of the X-axis line section 11, the Y-axis line section 12, and the insulating layer 13; a drive signal output section 14; and a position detection signal output section 15.

### [1. Designated-position detection control section 16]

The designated-position detection control section 16 controls the entire operation of the position detection unit 10 in coordination with the central processing unit 20. More specifically, the designated-position detection control section 16 feeds a switching signal S10 to the drive signal input section 14 and the designated-position detection control section 15 to control the on/off operation of first signal input switches 51Y and second signal input switches 52Y disposed in the drive signal output section 14, and the on/off operation of third signal input switches 61X and fourth signal input switches 62X. The designated-position detection control section 16 receives a designated-position detection signal S14 from the position detection signal output section 15 and provides the signal to the central processing unit 20 as the designated-position detection signal S2.

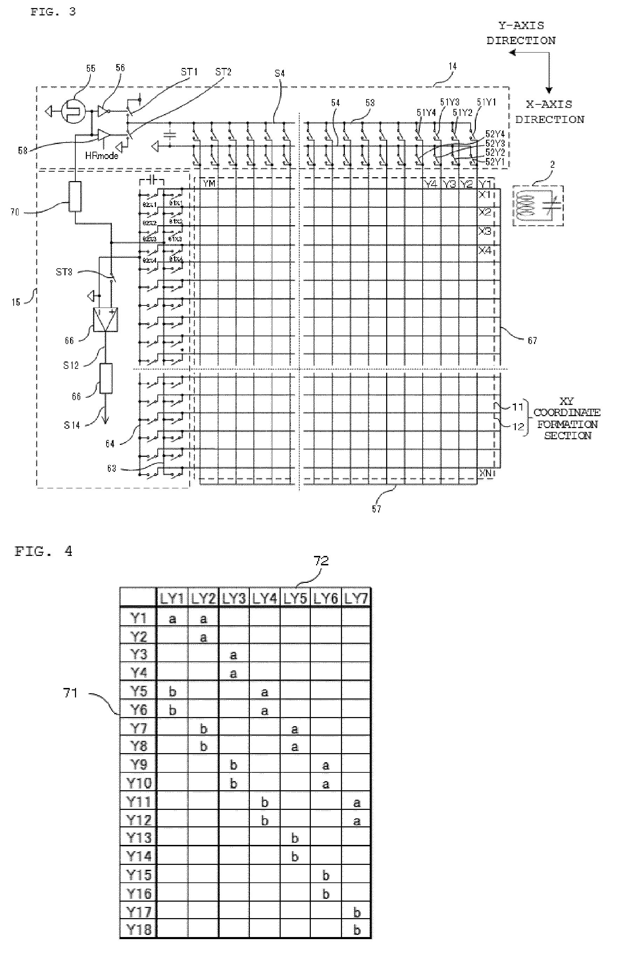

A switch management table (FIG. 4) is provided inside the designated-position detection control section 16, the switch management table being used for: controlling the on/off operation of the first and second loop coils connected to the Y-axis line bodies Y1 ... YM constituting the Y-axis line section 12, and the third and fourth loop coils connected to the X-axis line bodies X1 ... XN constituting the X-axis line section 11; and generating the switching signal S10 for selecting the axis line bodies used in the formation of a loop coil. The designated-position detection control section 16 generates the switching signal S10 on the basis of the switch management table, and controls the on/off operation of the switches of the first and second signal input switches 51Y, 52Y and the third and fourth signal input switches 61X, 62X.

### [2. X-axis line section 11 and Y-axis line section 12]

The X-axis line section 11 and the Y-axis line section 12 constitute the XY coordinate formation section together with the insulating layer 13. In the XY coordinate formation section, the X-axis line section 11 extends in rectilinear fashion in the Y-axis direction of the XY coordinate plane, as shown in FIG. 3, and has N (e.g., 32) rectilinear X-axis line bodies X1 ... XN arranged in parallel with each other at equidistant intervals in the X-axis direction.

One end of the X-axis line bodies X1 ... XN is connected to the third and fourth signal input switches 61X, 62X, the other end is short-circuited to a shared signal line 67, and the other ends of the X-axis lines are connected to each other.

The X-axis line bodies X1 ... XN form an output loop coil by having at least two X-axis line bodies selected in accordance with control carried out by the designated-position detection control section 16.

In contrast, the Y-axis line section 12 extends in rectilinear fashion in the X-axis direction of the XY coordinate plane, and has M (e.g., 20) rectilinear Y-axis line bodies Y1 ... YM arranged in parallel with each other at equidistant intervals in the X-axis direction.

One end of the Y-axis line bodies Y1 ... YM is connected to the first and second signal input switches 51Y, 52Y, the other end is short-circuited to a shared signal line 57, and the other ends of the Y-axis lines are connected to each other.

The Y-axis line bodies Y1 ... YM form an input loop coil by having at least two Y-axis line bodies selected in accordance with control carried out by the designated-position detection control section 16.

In this manner, the X-axis line bodies X1 ... XN and the Y-axis line bodies Y1 ... YM constituting the XY coordinate detection section intersect in alternating fashion so as to be mutually orthogonal with the insulating layer 13 therebetween. The superimposed X-axis line section 11 and Y-axis line section 12 make it possible to specify the coordinate position by the intersection of the X-axis line bodies X1 ... XN and the Y-axis line bodies Y1 ... YM as the XY coordinate position on the display surface of the display section 30, i.e., the operation display surface of the protective layer section 31.

More specifically, when the position designation tool 2 has designated an XY coordinate position of the XY coordinate formation section, an input signal inputted from an input loop coil formed by at least two Y-axis line bodies selected by the drive signal output section 14 is transmitted to an output loop coil formed by at least two X-axis line bodies selected by the position detection signal output section 15 via the position designation tool 2, whereby the designated-position detection signal S14 is outputted from the position detection signal output section 15.

### [3. Drive signal output section 14]

The drive signal output section 14 is provided to one end side of the plurality of Y-axis line bodies constituting the Y-axis line section 12, and a drive pulse signal S4 generated by the drive signal output section 14 is inputted to the one end side of the plurality of Y-axis line bodies.

Specifically, the drive signal output section 14 comprises the first signal input switches 51Y, the second signal input switches 52Y, a shared signal line 53 to which the first signal input switches 51Y are connected, a shared signal line 54 to which the second signal input switches are connected, a pulse generation circuit 55 for transforming the drive pulse signal S4 generated on the basis of a control signal S6 into a rectangular wave to be fed to the shared signal line 53, an inverter 56, an amplifier 58, and switches ST1, ST2.

The first signal input switches 51Y are connected to one end of the Y-axis line bodies Y1, Y2 ... Y(M - 2), Y(M - 1), YM in corresponding fashion to the Y-axis line bodies. These receive the drive pulse signal S4 generated in the input drive pulse generation circuit 55 on the basis of the control signal S6 and transformed into a rectangular wave via the inverter 56 and the amplifier 58, and feeds the drive pulse signal S4 to the Y-axis line bodies via the shared signal line 53. In other words, the first signal input switches 51Y function as a first selection section for selecting one or more Y-axis line bodies to which the drive pulse signal S4 is inputted from among the Y-axis line bodies Y1, Y2 ... Y(M - 2), Y(M - 1), YM.

One end of the second signal input switches 52Y is connected to one end of the Y-axis line bodies Y1, Y2 ... Y(M - 2), Y(M - 1), YM, which is the later stage of the first signal input switches 51Y, in corresponding fashion to the Y-axis line bodies. The other end of the second signal input switches 52Y is connected to ground via the shared signal line 54. In other words, the second signal input switches 52Y are provided between ground and one end of the corresponding Y-axis line bodies in corresponding fashion to the Y-axis line bodies. The second signal input switches 52Y are switched on, whereby the second signal input switches 52Y function as a second selection section for forming an input loop coil together with the Y-axis line bodies selected by the first signal input switches 51Y.

In other words, the first and second selection sections function as a Y-axis line body selection section for selecting at least two Y-axis line bodies for forming an input loop coil from the plurality of Y-axis line bodies.

### [4. Position detection signal output section 15]

The position detection signal output section 15 is provided to one end side of the plurality of X-axis line bodies constituting the X-axis line section 11, and outputs the designated-position detection signal S14 corresponding to a designated coordinate position when the position designation tool 2 has designated an XY coordinate position of the XY coordinate formation section.

Specifically, the position detection signal output section 15 comprises the third signal input switches 61X, the fourth signal input switches 62X, a shared signal line 63 to which the third signal input switches 61X are connected, a shared signal line 64 to which the second signal input switches 62X are connected, a switch ST3, and an electromagnetic induction signal output circuit 66 having a differential amplification circuit configuration.

The third signal input switches 61X are connected to one end of the X-axis line bodies X1, X2 ... X (N - 2), X (N - 1), XN in corresponding fashion to the X-axis line bodies. These are connected, by way of the shared signal line 63, to the non-inverting input end of the electromagnetic induction signal output circuit 66, which has a differential amplification circuit configuration, via the switch ST3. In other words, the third signal input switches 61X are connected to one end side of the X-axis line bodies and select X-axis line bodies for forming an output loop coil.

One end of the fourth signal input switches 62X is connected to one end of the X-axis line bodies X1, X2 ... X(N - 2), X(N - 1), XN, which is the later stage of the third signal input switches 61X, in corresponding fashion to the X-axis line bodies. The other end of the fourth signal input switches 62X is connected to ground via inverting input end of electromagnetic induction signal output circuit 66 via the shared signal line 64. In other words, the fourth signal input switches 62X are connected to one end side of the X-axis line bodies, and select X-axis line bodies for forming an output loop coil together with the X-axis line bodies selected by the third signal input switches 61X.

In other words, the third signal input switches 61X and the fourth signal input switches 62X function as an X-axis line body selection unit for selection at least two X-axis line bodies for forming an output loop coil.

### <Operation in the position detection unit 10>

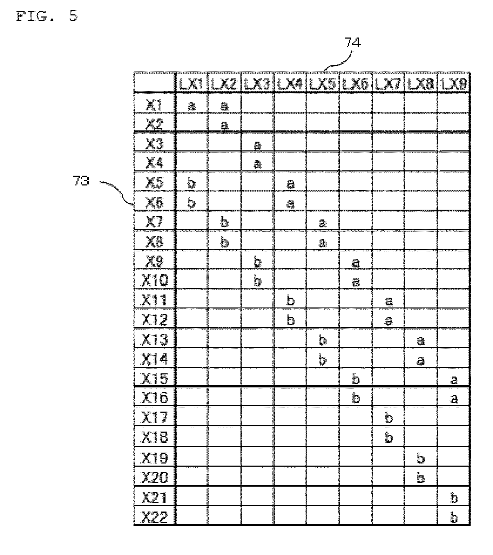

FIGS. 4 and 5 are conceptual views showing a switch management table provided inside the designated-position detection control section 16. The table shown in FIG. 4 is used for controlling which Y-axis line bodies in particular among the Y-axis line bodies Y1, Y2 ... Y(M - 2), Y(M - 1), YM constituting the Y-axis line section 12 are to be used for forming an input loop coil, i.e., controlling the on/off operation of the first signal input switches 51Y and the second signal input switches 52Y connected to one end of the Y-axis line bodies. The designated-position detection control section 16 generates the switching signal S10 on the basis of the table, and the drive signal output section 14 having received the switching signal controls the signal input switches 51Y, 52Y to form input loop coils LY1, ..., LYK using one or a combination of a plurality of Y-axis line bodies.

The table shown in FIG. 5 is used for controlling which X-axis line bodies in particular among the X-axis line bodies X1, X2 ... X (N - 2), X (N - 1), XN constituting the X-axis line section 11 are to be used for forming an output loop coil, i.e., controlling the on/off operation of the third signal input switches 61X and the fourth signal input switches 62X connected to one end of the X-axis line bodies. The designated-position detection control section 16 generates the switching signal S10 on the basis of the table, and the position detection signal output section 15 having received the switching signal controls the signal input switches 61X, 62X to form output loop coils LX1, ... , LXL using one or a combination of a plurality of X-axis line bodies.

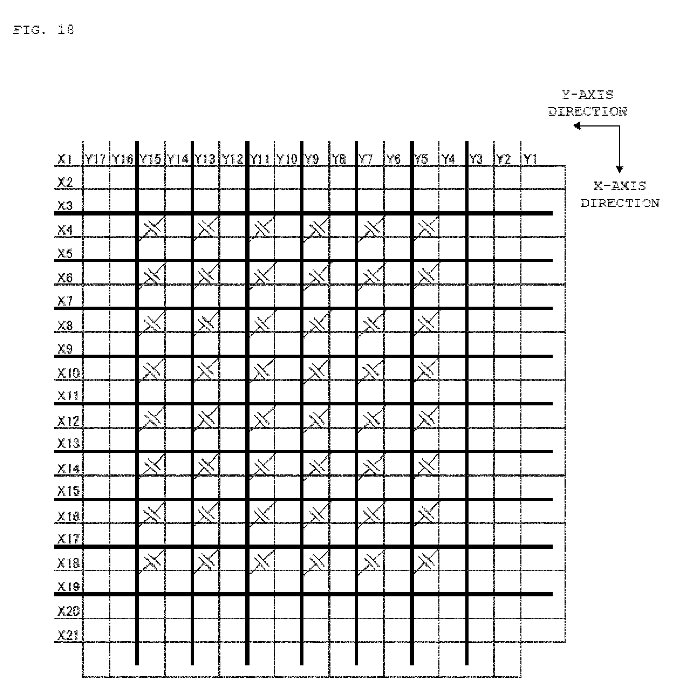

In the example of FIG. 4, 18 Y-axis line bodies 71 constituting the Y-axis line section 12 are shown in the vertical axis direction, and input loop coil no. 72 (LY1 to LYK: LY7 in the example in FIG. 4) formed by the Y-axis line bodies is shown in the horizontal axis direction. The first signal input switches 51Y affixed with "a" in the table and disposed in correspondence to one or more Y-axis line bodies are switched on, on the basis of the switching signal S10 received from the designated-position detection control section 16. Also, at the same time, the second signal input switches 52Y affixed with "b" in the table and disposed in correspondence to one or more Y-axis line bodies are switched on, on the basis of the switching signal S10 received from the designated-position detection control section 16.

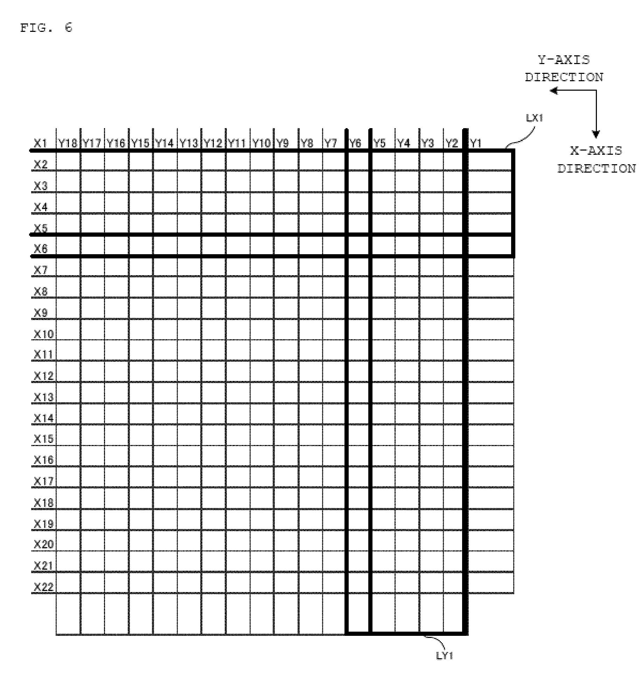

FIG. 6 is a conceptual view of input loop coils formed as a result of the first and second signal input switches 51Y, 52Y being switched on by the switching signal S10 generated on the basis of the table shown in FIG. 4. Referring to input loop coil no. LY1 in the table of FIG. 4, the Y-axis line body Y1 is affixed with "a" in the table, and the first signal input switch 51Y1 corresponding to the Y-axis line body Y1 is switched on. Also, the Y-axis bodies Y5 and Y6 are affixed with "b" in the table, and the second signal input switches 52Y5 and 52Y6 corresponding to the Y-axis bodies Y5 and Y6 are switched on. As shown in FIG. 6, an input loop coil LY1 composed of the Y-axis line body Y1 and the Y-axis bodies Y5 and Y6 is formed thereby.

Hereinbelow, the input loop coils LY2, LY3, ..., LYK (LY7 in the example in FIG. 4) are similarly formed on the basis of the table shown in FIG. 4.

The on/off operation of the first and second signal input switches is thus controlled on the basis of the switch management table shown in FIG. 4, and one or more input loop coils LY are thereby formed from the plurality of Y-axis line bodies.

The Y-axis line body selected by the first and second signal input switches 51Y, 52Y is switched in sequential fashion on the basis of the switch management table shown in FIG. 4, whereby the formed input loop coils LY1, ..., LYK are also switched in sequential fashion.

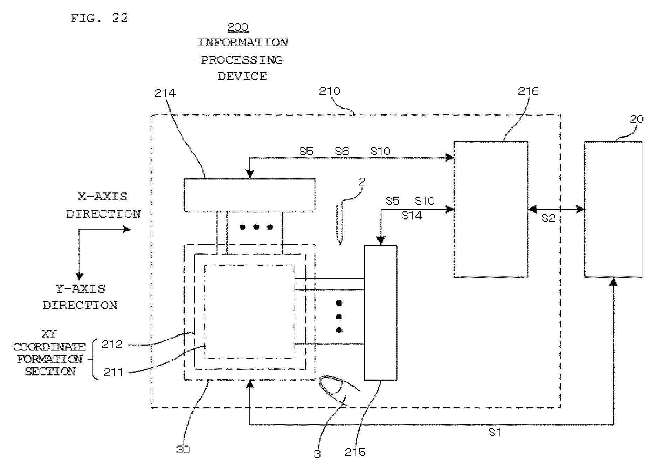

In the example of FIG. 5, 22 X-axis line bodies 73 constituting the X-axis line section 11 are shown in the vertical direction, and output loop coil no. 74 (LX1 to LXL) formed by the X-axis line bodies is shown in the horizontal direction. The third signal input switches 61X affixed with "a" in the table and disposed in correspondence to one or more X-axis line bodies are switched on, on the basis of the switching signal S10 received from the designated-position detection control section 16. Also, at the same time, the fourth signal input switches 62X affixed with "b" in the table and disposed in correspondence to one or more X-axis line bodies are switched on, on the basis of the switching signal S10 received from the designated-position detection control section 16.

FIG. 6 is a view conceptually showing the output loop coils formed as a result of the third and fourth signal input switches 61X, 62X being switched on by the switching signal S10 generated on the basis of the table shown in FIG. 5. Referring to output loop coil no. LX1 of the table in FIG. 5, the X-axis body X1 is affixed with "a" in the table, and the third signal input switch 61X1 corresponding to the X-axis body X1 is switched on. Also, the X-axis bodies X5 and X6 are affixed with "b" in the table, and the fourth signal input switches 62X5 and 62X6 corresponding to the X-axis bodies X5 and X6 are switched on. As shown in FIG. 6, an output loop coil LX1 composed of the X-axis body X1 and the X-axis bodies X5 and X6 is formed thereby.

Hereinbelow, the output loop coils LX2, LX3, ..., LXL (LY9 in the example in FIG. 5) are similarly formed, as shown in FIG. 6, the basis of the table shown in FIG. 5.

The on/off operation of the third and fourth signal input switches is thus controlled on the basis of the switch management table shown in FIG. 5, and one or more input loop coils LX are thereby formed from the plurality of X-axis line bodies.

The X-axis line body selected by the third and fourth signal input switches 61X, 62X is switched in sequential fashion on the basis of the switch management table shown in FIG. 5, whereby the formed output loop coils LX1, ..., LXL are also switched in sequential fashion.

In the present embodiment, the drive signal output section 14 switches on the first and second signal input switches in sequence using a reference detection cycle, and thereby generates a drive pulse signal in the Y-axis line section 12 by allowing a drive pulse signal, i.e., a drive input pulse electric current to flow in sequential fashion in the input loop coils LY1, LY2 ... LYK. In this state, the user performs a pen-touch operation on the XY coordinate plane of the XY coordinate formation section using the pen-type position designation tool 2 to thereby designate a coordinate position.

At this time, the position designation tool 2 has a resonance circuit composed of an induction coil and a resonance capacitor, and creates a tuning resonance electric current in the induction coil and the resonance capacitor using the magnetic field generated by the input loop coils LY1, ..., LYK in the position touched with the pen by the user. An induction voltage is induced in the output loop coils LX1, ..., LXL in the position touched by the pen, on the basis of the induction field generated in the induction coil on the basis of tuning resonance electric current.

The position detection signal output section 15 receives a detection voltage, which is based on the induction voltage induced in the output loop coils LX1, ..., LXL formed by the third and fourth signal input switches 61X, 62X, in the electromagnetic induction signal output circuit 66, and outputs the detection voltage as a designated-position detection output signal S12. The outputted designated-position detection output signal S12 is sent out to the designated-position detection control section 16 as a position detection output signal S14 via a synchronous wave detection circuit.

In the present embodiment, the on-operation interval of the third and fourth signal input switches 61X, 62X of the position detection signal output section 15 is selected by timing that cycles around the on-operation intervals of the first and second signal input switches 51Y, 52Y of the drive signal output section 14. A position detection output can thereby be obtained from all the output loop coils LX1, ..., LXL during the drive intervals in which the driver input pulse electric current is flowing to the input loop coils LY1, ..., LYK.

In the present embodiment, it is apparent from the tables shown in FIGS. 4 and 5 and the example of the input loop coils and the output loop coils shown in FIG. 6 that a loop coil may be formed in some cases by using a plurality of axis line bodies in parallel (for example, the Y-axis line body Y1 and Y-axis body Y2 in the input loop coil LY2). Generally, a conductive line or other line material for forming the axis line bodies according to the present embodiment comprises a predetermined direct current resistance component. However, using a plurality of axis line bodies in parallel as in the present embodiment makes it possible to reduce the effect of the direct current resistance component.

In the present embodiment, the on operations of the first and second signal input switches 51Y, 52Y and the third and fourth signal input switches 61X, 62X are controlled on the basis of the tables shown in FIGS. 4 and 5 to thereby form an input loop coils LY and an output loop coils LX. However, the tables shown in FIGS. 4 and 5 can be rewritten, as appropriate, or the tables to be referenced may be modified to thereby modify the configuration (e.g., the width of individual loop coils and/or the intervals between the loop coils) of the axis line bodies for forming the loop coils.

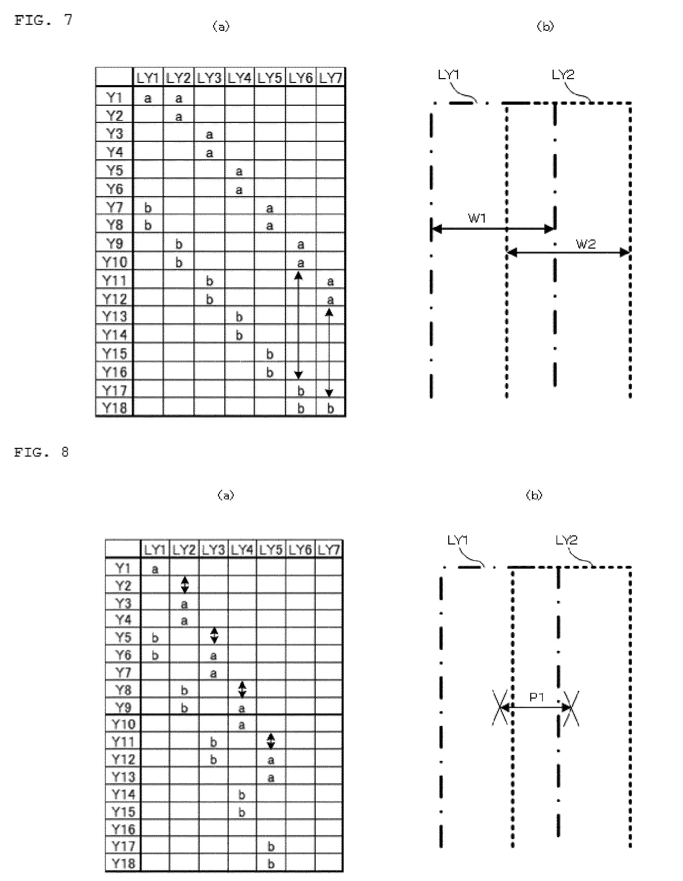

For example, in the example shown in FIG. 4, three or four Y-axis line bodies are placed between the input loop coils, but in the example shown in FIG. 7(a), five or six Y-axis line bodies are placed between the input loop coils. The width W1, W2 of the individual loop coils formed by the Y-axis line bodies can thereby be modified, as shown in FIG. 7(b).

In the example shown in FIG. 8(a), the width of the input loop coils is three Y-axis line bodies in the same manner as in FIG. 4, but the input loop coils LY1, ..., LY5 are not adjacently formed, but rather have a single Y-axis line body placed therebetween (e.g., Y-axis body Y2 between LY1 and LY2). As shown in FIG. 8(b), an interval P1 is thereby formed with ample spacing between adjacent input loop coils in comparison with the example of the input loop coils shown in FIG. 4.

The examples shown in FIGS. 7 and 8 are both examples of input loop coils LY, but, as shall be apparent, the same control can also be implemented in the output loop coils LX.

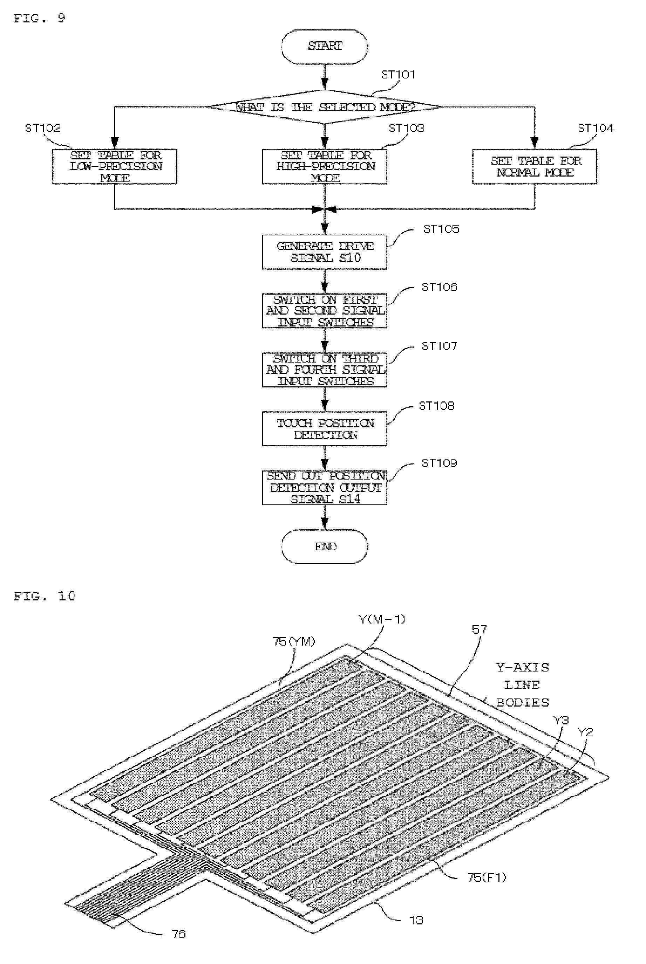

FIG. 9 is a diagram showing the processing flow for the case in which three switch management tables (a low-precision mode table, a high-precision mode table, and a normal mode table) having different configurations of axis line bodies for form loop coils are provided for the Y-axis line section 12 (i.e., for the input loop coils) and the X-axis line section 11 (i.e., for the output loop coils) in the manner of the examples of FIGS. 7 and 8. In the low-precision mode table, the intervals between loop coils formed by the axis line bodies are formed wider than in the normal mode table. The high-precision mode table has intervals formed with narrow spacing between loop coils formed by the axis line bodies in comparison with the normal mode table.

In FIG. 9, first, the central processing unit 20 selects whether the low-precision mode table, the high-precision mode table, or the normal mode table is to be applied as the switch management table to be applied to the Y-axis line section and X-axis line section (ST101). The selection is made by the user or the application on the basis of the conditions of the touch operation or in accordance with the operation of the user. For example, the normal mode table is selected when an application on standby is to be executed. The low-precision mode table is selected when a telephone application, an image replay application, an image capture application, or other application that does not require fine pen-touch operation of the user is to be executed. The high-precision mode table is selected when a character input application, a drawing application, or other application that requires fine pen-touch operation by the user is to be executed.

When the mode of the switch management table to be used by the central processing unit 20 is selected, the designated-position detection control section 16 sets the low-precision mode table, the high-precision mode table, or the normal mode table as a reference in accordance with the selection (ST102 to ST104). The designated-position detection control section 16 generates the switching signal S10 in accordance with the switch management table thus set, and sends the switching signal to the drive signal output section 14 and the position detection signal output section 15 (ST105).

The drive signal output section 14 having received the switching signal S10 controls the on-operation of the first and second signal input switches 51Y, 52Y on the basis of the switching signal S10, and switches the input loop coils LY composed of the Y-axis line bodies (ST106). The position detection signal output section 15 having received the switching signal S10 controls the on-operation of the third and fourth signal input switches 61X, 62X on the basis of the switching signal S10, and switches the output loop coils LX composed of the X-axis line bodies (ST107).

The position detection signal output section 15 detects the coordinate position of the pen-touch operation carried out with the position designation tool 2 on the XY coordinate plane of the XY coordinate formation section using the input loop coils and output loop coils formed in ST106 and ST107 (ST108). The position detection signal output section 15 generates the position detection output signal S14 on the basis of the detected coordinate position and sends the signal to the designated-position detection control section 16 (ST109). The designated-position detection control section 16 having received the signal sends the designated-position detection signal S2 to the central processing unit 20 on the basis of the detection output signal S14 thus received, and then ends the present processing.

In the present embodiment, this processing is repeated for a predetermined cycle. In the example described above, three tables are used having different intervals of loop coils formed by the axis line bodies, and it is also possible to prepare tables having different widths, different numbers, or the like of the axis line bodies constituting individual loop coils. Using a plurality of tables having different configurations of the axis line bodies for forming the loop coils in this manner makes it possible to temporarily increase the detection precision of the pen-touch operation and modify the detection speed and/or the detectable range.

In the present embodiment, the on-operation of the first and second signal input switches 51Y, 52Y connected to the Y-axis line bodies and the third and fourth signal input switches 61X, 62X connected to the X-axis line bodies is controlled using the switch management table. However, it is also possible to have the signal input switches constantly on and to control the off-operation of the switches on the basis of the switching signal S10 generated on the basis of the switch management table to thereby form the input loop coils and output loop coils.

### <Configuration of the XY coordinate formation section>

FIG. 10 is a view showing the specific structure of the Y-axis line section 12 constituting the XY coordinate formation section according to the present embodiment. In FIG. 10, the Y-axis line bodies constituting the Y-axis line section 12 extend in a rectilinear fashion, and are arranged in parallel on the insulating layer 13 at mutually equidistant intervals. On end of the Y-axis line bodies is connected to the first and second signal input switches 51Y, 52Y via a sensor connection draw-out section 76. The other ends of the Y-axis line bodies are connected to each other via the shared signal line 57.

In the present embodiment, an external peripheral electrode section 75 is disposed in a position on the insulating layer 13 corresponding to the peripheral edge of the display section 30. The external peripheral electrode section 75 is provided for the purpose of reducing static electricity and various noise components that become superimposed on the Y-axis line bodies and the display section 30. In lieu thereof, in the present embodiment, the external peripheral electrode section 75 is used as one of the Y-axis line bodies constituting the Y-axis line section 12. In other words, one end of the external peripheral electrode section 75 is connected to the first and second signal input switches 51Y, 52Y via the sensor connection draw-out section 76 in the same manner as the Y-axis line bodies, and the outer edge of the Y-axis line bodies extends parallel to the Y-axis line body Y1 and extends in the right-angle direction to the Y-axis line bodies after arriving at the outer edge of the Y-axis line bodies. The external peripheral electrode section 75 is made to function as the shared signal line 57 and is connected to the Y-axis line bodies. The outer edge of the Y-axis line body YM extends parallel to the Y-axis line body YM so as to again function as a single Y-axis line body Y1. The external peripheral electrode section 75 is connected to the first and second signal input switches 51Y, 52Y via the sensor connection draw-out section 76.

In other words, in the present embodiment, the Y-axis line bodies has a portion of the external peripheral electrode section 75 formed as a Y-axis line body Y1, has the Y-axis line bodies Y2, ..., Y(M - 1) arranged adjacent thereto, and has a portion of the external peripheral electrode section 75 formed as a Y-axis line body YM adjacent thereto.

The external peripheral electrode section 75 was conventionally hidden in the casing of the terminal device 1 and could not be used as a part of the XY coordinate formation section, but using such a configuration makes it possible to use the external peripheral electrode section as the XY coordinate formation section and to effectively use space in a terminal device.

The structure of the X-axis line section 11 will not be described in particular detail, but the configuration is the same except that the axis line bodies extend in a direction orthogonal to the Y-axis line bodies.

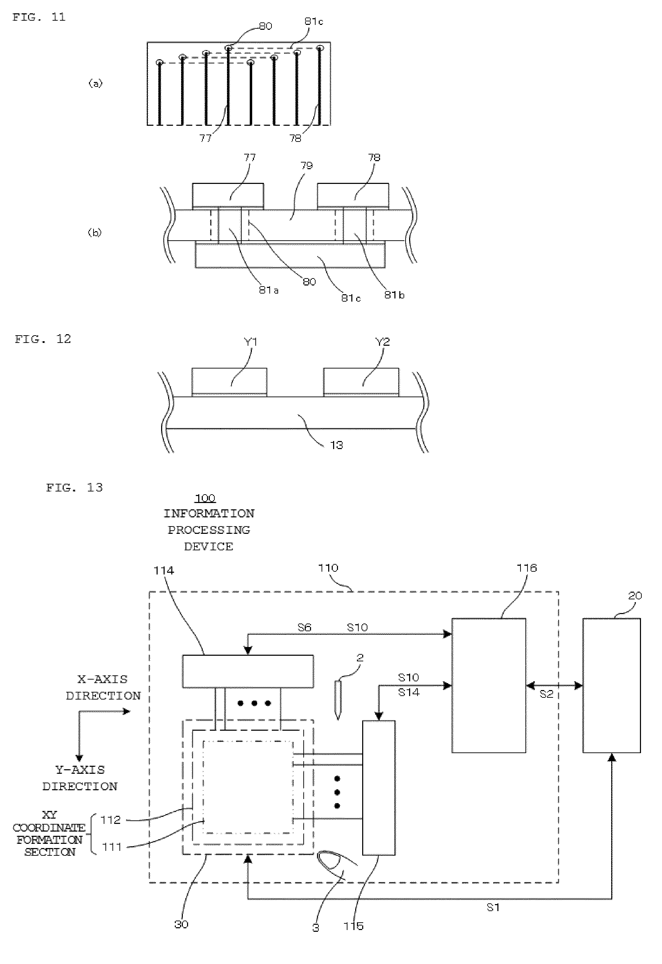

FIG. 11 is a view schematically showing the structure of the end part of a conventional Y-axis line section, and FIG. 12 is a view schematically showing the structure of the end part of the Y-axis line bodies constituting the Y-axis line section according to the present embodiment.

FIG. 11(a) is a view schematically showing the end part of a conventional Y-axis line section. FIG. 11(b) is a view schematically showing a partial cross section of the end part of a conventional Y-axis line section. In FIG. 11(a), the axis line bodies 77 and 78, and the like constituting the conventional Y-axis line section are connected by an inter-body lead line 81c, whereby loop coils are formed with the combinations of the constituting axis line bodies formed in a fixed manner. The constituted loop coils are arranged so as to be mutually overlapping. Therefore, in FIG. 11(b), the inter-body lead line 81c is disposed on the surface opposite from the surface on which the axis line bodies of an insulating layer 79 are disposed in order to prevent structural interference between loop coils. Loop coils are formed by the inter-body lead line 81c and the end part of the axis line bodies being connected via interlayer connection sections 81a, 81b. Accordingly, a through-hole 80 is required in the insulating layer 79.

On the other hand, in the Y-axis line bodies according to the present embodiment, one end thereof is connected to the first and second signal input switches 51Y, 52Y, and input loop coils are formed by controlling the on/off operation of the signal input switches. Therefore, the Y-axis line bodies Y1 ... YM can be formed so that one end thereof is connected to the shared signal lines 53 and 54 via the first and second signal input switches 51Y, 52Y. In other words, as shown in FIG. 12, all of the Y-axis line bodies Y1 ... YM can be disposed on one surface of the insulating layer 13. Consequently, an insulating layer having a through-hole conventionally required in the Y-axis line bodies is not required. It is thereby possible to use polyethylene terephthalate (PET), polycarbonate (PC), or another low-cost, flexible transparent film material as the insulating layer 13.

According to the terminal device 1 and the position detection unit 10 according to the first embodiment of the present invention, the Y-axis line bodies to which the drive pulse signal S4 is inputted, i.e., the Y-axis line bodies for forming the input loop coils are switched in sequential fashion and selected by the first and second signal input switches 51Y, 52Y connected to one end of the plurality of Y-axis line bodies Y1 ... YM constituting the Y-axis line section 12. The X-axis line bodies for forming the output loop coils are switched in sequential fashion and selected by the third and fourth signal input switches 61X, 62X connected to the plurality of X-axis line bodies X1 ... XN constituting the X-axis line section 11. Using such a configuration makes it possible to select, as appropriate, and switch the axis line bodies for forming the loop coils in accordance with conditions, and to temporarily increase the coordinate detection precision and modify the detection speed and/or the detectable range of coordinates.

In some cases, it is possible to use a plurality of Y-axis line bodies in parallel for forming the loop coils, and making it possible to reduce the effect of the direct current resistance component included in a conductive line for forming the axis line bodies.

The axis line bodies for forming the loop coils are furthermore switched sequentially and controlled by the first to fourth signal input switches, so the loop coils do not interfere with each other in the manner seen in a conventional XY coordinate detection section. There is therefore no requirement to provide a through-hole or special structure to the insulating layer 13 and options for the insulating layer 13 can be broadened.

### <Overview of the second embodiment of the present invention>

A second embodiment of the present invention will be described. A description of the components that achieve the same function as the terminal device 1 and the position detection unit 10 according to the first embodiment described above will be omitted. The first embodiment described above and the second embodiment described below can be combined in part or in whole, as appropriate.

As shown in FIG. 13, the constituent elements constituting the terminal device 100 according to the second embodiment of the present invention are the same constituent elements of the terminal device 1 according to the first embodiment shown in FIG. 2. However, an X-axis line section 111 and a Y-axis line section 112 constituting the XY coordinate formation section, and the switch management table provided to designated-position detection control section 116 are different as later described. Therefore, the selection operation of the X-axis line bodies X1, ..., XN constituting the X-axis line section 111 and the selection operation of the Y-axis line bodies Y1 ... YM constituting the Y-axis line section 112 are different, and a new function is imparted to the terminal device 100 according to the second embodiment.

In other words, in the terminal device 100 according to the second embodiment, a portion of the Y-axis line bodies Y1 ... YM is used in the formation of input loop coils for an electromagnetic induction scheme, and the remaining portion is used as Y-axis electrodes for an electrostatic capacitance scheme. Similarly, a portion of the X-axis line bodies X1 ... XN is used in the formation of output loop coils for an electromagnetic induction scheme, and the remaining portion is used as X-axis electrodes for an electrostatic capacitance scheme. Therefore, the axis line bodies constituting the axis line sections 111, 112 in the present embodiment can be used as Y-coordinate system electrodes or X-coordinate system electrodes in an electrostatic capacitance scheme.

FIG. 13 is a block view showing the configuration of a terminal device 100 according to the second embodiment of the present invention. In FIG. 13, a terminal device 100 according to the present embodiment comprises, as constituent elements thereof, at least a position detection unit 110, a central processing unit 20, and a display section 30.

The position detection unit 110 is disposed on the upper surface of the display section 30, and comprises the Y-axis line section 112, the X-axis line section 111, and the insulating layer 13. The central processing unit 20 exchanges an information display signal S1 with the display section 30. The central processing unit 20 also receives from the designated-position detection control unit 116 a display position detection signal S2 showing a designated position when a user has designated a specific position on the XY display surface of the display section 30 by performing an operation in which the pen-shaped position designation tool 2 is brought into contact with or proximity to the display surface of the display section 30 (hereinafter referred to as a "pen touch operation"). Furthermore, in the terminal device 100 according to the present embodiment, the central processing unit 20 receives from the designated-position detection control unit 116 a display position detection signal S2 showing a designated position when a user has designated a specific position on the XY display surface of the display section 30 by performing an operation in which a fingertip 3 is brought into contact with or in proximity to the display surface of the display section 30 (hereinafter referred to as a "finger touch operation"). The specific details of the position detection unit 110 are later described.

### <Position detection unit 110>

In the present embodiment, the position detection unit 110 comprises the designated-position detection control section 116; an XY coordinate formation section composed of the X-axis line section 111, the Y-axis line section 112, and the insulating layer 13; a drive signal output section 114; and a position detection signal output section 115.

### [1. Designated-position detection control section 116]

The designated-position detection control section 116 controls the entire operation of the position detection unit 100 in coordination with the central processing unit 20. More specifically, the designated-position detection control section 116 feeds a switching signal S10 to the drive signal output section 114 and the position detection signal output section 115 to control the on/off operation of first signal input switches 51Y and second signal input switches 52Y disposed in the drive signal output section 114, and the on/off operation of third signal input switches 61X and fourth signal input switches 62X. The designated-position detection control section 116 receives a designated-position detection signal S14 from the position detection signal output section 115 and provides the signal to the central processing unit 20 as the designated-position detection signal S2.

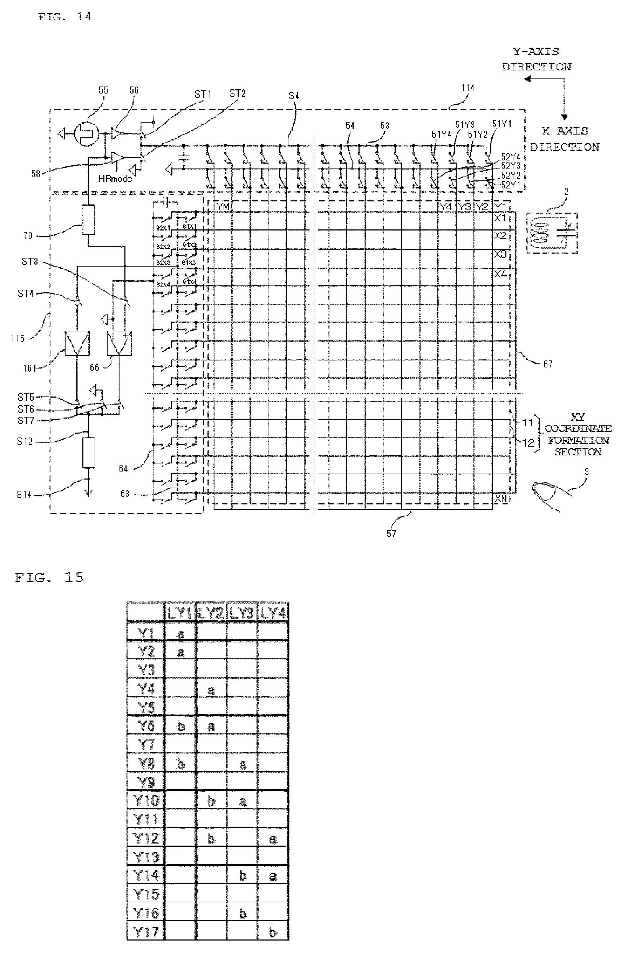

A switch management table (FIG. 15) is provided inside the designated-position detection control section 116, the switch management table being used for: controlling the on/off operation of the first and second signal input switches 51Y, 52Y connected to the Y-axis line bodies Y1 ... YM constituting the Y-axis line section 12, and the third and fourth signal input switches 61X, 62X connected to the X-axis line bodies X1 ... XN constituting the X-axis line section 11; and generating the switching signal S10 for selecting the axis line bodies to be used in the formation of a loop coil in an electromagnetic induction scheme, and the axis line bodies to be used as X-axis and Y-axis electrodes in an electrostatic capacitance scheme. The designated-position detection control section 116 generates the switching signal S10 on the basis of the switch management table, and controls the on/off operation of the switches of the first and second signal input switches 51Y, 52Y and the third and fourth signal input switches 61X, 62X.

### [2. X-axis line section 111 and Y-axis line section 112]

The X-axis line section 111 and the Y-axis line section 112 constitute the XY coordinate formation section together with the insulating layer 13. In the XY coordinate formation section, the X-axis line section 111 extends in rectilinear fashion in the Y-axis direction of the XY coordinate plane, as shown in FIG. 14, and has N (e.g., 32) rectilinear X-axis line bodies X1, X2 ... XN arranged in parallel with each other at equidistant intervals in the X-axis direction.

In the second embodiment, one end side of predetermined X-axis line bodies X1, X2, X4, X6 ... X(N - 1), XN of the X-axis line bodies X1, ..., XN is connected to the third and fourth signal input switches 61X, 62X in the same manner as the first embodiment, the other end is short-circuited, and the other ends of the axis line bodies are connected to each other via the shared signal line 67. On the other hand, one end of the remaining axis line bodies X3, X5, X7 ... X (N - 4), X (N - 2) is connected to the third and fourth signal input switches 61X, 62X, and the other end sides of the axis line bodies are formed independently of each other without being connected to the shared signal line 67.

In other words, at least two axis line bodies are selected from the X-axis line bodies X1, X2, X4, X6 ... X (N - 1), XN of the X-axis line bodies X1, ..., XN in accordance with the control carried out by the designated-position detection control section 116 to thereby form output loop coils to be used in the electromagnetic induction scheme.

On the other hand, individual X-axis electrodes to be used in the electrostatic capacitance scheme are formed among the X-axis line bodies X3, X5, X7 ... X (N - 4), X (N - 2) of the X-axis line bodies X1 ... XN in accordance with control carried out by the designated-position detection control section 16.

In contrast, the Y-axis line section 112 extends in rectilinear fashion in the X-axis direction of the XY coordinate plane, and has M (e.g., 20) rectilinear Y-axis line bodies Y1, Y2 ... YM arranged in parallel with each other at equidistant intervals in the X-axis direction.

In the second embodiment, one end side of predetermined Y-axis line bodies Y1, Y2, Y4, Y6 ... Y(M - 1), YM of the Y-axis line bodies Y1, ..., YN is connected to the first and second signal input switches 51Y, 52Y in the same manner as the first embodiment, the other end is short-circuited, and the other ends of the axis line bodies are connected to each other via the shared signal line 57. On the other hand, one end of the remaining axis line bodies Y3, Y5, Y7 ... Y (M - 4), Y (M - 2) is connected to the first and second signal input switches 51Y, 52Y, but the other end sides of the axis line bodies are formed independently of each other without being connected to the shared signal line 57.

At least two axis line bodies of the Y-axis line bodies Y1, Y2, Y4, Y6 ... YM of the Y-axis line bodies Y1 ... YM are selected in accordance with the control carried out by the designated-position detection control section 116 to form input loop coils in an electromagnetic induction scheme.

On the other hand, individual Y-axis electrodes to be used in an electrostatic capacitance scheme are formed from Y3, Y5, Y7 ... Y (M - 4), Y (M - 2) among the Y-axis line bodies Y1 ... YM in accordance with control carried out by the designated-position detection control section 116.

In this manner, the X-axis line bodies X1, X2 ... XN and Y-axis line bodies Y1, Y2 ... YM constituting the XY coordinate detection section intersect in alternating fashion so as to be mutually orthogonal with the insulating layer 13 placed therebetween. The coordinate position can be specified by the intersecting point between the X-axis line bodies X1, X2 ... XN and Y-axis line bodies Y1, Y2 ... YM as the XY coordinate position on the display surface of the display section 30, i.e., on the operation display surface of the protective layer section 31 by the stacked X-axis line section 111 and Y-axis line section 112.

More specifically, when control based on the electromagnetic induction scheme is to be carried out by the designated-position detection control section 116, an input signal inputted from the input loop coils formed by at least two Y-axis line bodies selected by the drive signal output section 114 is transmitted to the output loop coils formed via the position designation tool 2 by at least two X-axis line bodies selected by the position detection signal output section 115 when the position designation tool 2 has designated the XY coordinate position of the XY coordinate formation section in the same manner as the first embodiment, whereby the position detection signal S14 is outputted from the position detection signal output section 115.

On the other hand, when control based on the electrostatic capacitance scheme is to be carried out by the designated-position detection control section 116, the fingertip 3 designates an XY coordinate position of the XY coordinate formation section, whereupon the electromagnetic field formed by the position detection signal output section 115 and the Y-axis line bodies selected by the drive signal output section 114 is converted to an electrostatic value corresponding to the user's finger. A change in the electrostatic value is detected by the position detection signal output section 115, whereby the designated-position detection signal S14 is generated, and the designated-position detection signal S14 is outputted from the position detection signal output section 115.

### [3. Drive signal output section 114]

The drive signal output section 114 is provided to one end side of the plurality of Y-axis line bodies constituting the Y-axis line section 112, and a drive pulse signal S4 generated by the drive signal input section 114 is inputted to the one end side of the plurality of Y-axis line bodies.

Specifically, the drive signal input section 114 comprises the first signal input switches 51Y, the second signal input switches 52Y, a shared signal line 53 to which the first signal input switches 51Y are connected, a shared signal line 54 to which the second signal input switches are connected, a pulse generation circuit 55 for transforming the drive pulse signal S4 generated on the basis of a control signal S6 into a rectangular wave to be fed to the shared signal line 53, an inverter 56, an amplifier 58, and switches ST1, ST2.

The first signal input switches 51Y are connected to one end of the Y-axis line bodies Y1 ... Y(M - 1), YM in corresponding fashion to the Y-axis line bodies. These receive, by way of the shared signal line 53, the drive pulse signal S4 generated in the input drive pulse generation circuit 55 on the basis of the control signal S6 and transformed into a rectangular wave via the inverter 56 and the amplifier 58, and feeds the drive pulse signal S4 to the Y-axis line bodies. In other words, the first signal input switches 51Y function as a first selection section for selecting one or more Y-axis line bodies to which the drive pulse signal S4 is inputted from among the Y-axis line bodies Y1 ... YM.

In the present embodiment, the Y-axis line bodies Y1, Y2, Y4, Y6 ... Y (M - 1), YM of the Y-axis line bodies Y1 ... YM are used as Y-axis line bodies for forming input loop coils in an electromagnetic induction scheme. On the other hand, the remaining Y-axis line bodies, i.e., the Y-axis line bodies Y3, Y5, Y7 ... Y (M - 4), Y (M - 2) are used as Y-axis electrodes in an electrostatic capacitance scheme. Therefore, the first signal input switches 51Y corresponding to the Y-axis line bodies Y1, Y2, Y4, Y6 ... Y (M - 1), YM for forming input loop coils in an electromagnetic induction scheme and the first signal input switches 51Y corresponding to the Y-axis line bodies Y3, Y5, Y7 ... Y (M - 4), Y (M - 2) used as Y-axis electrodes in an electrostatic capacitance scheme are both switched on in sequential fashion in a predetermined cycle.

One end of the second signal input switches 52Y is connected to one end of the Y-axis line bodies Y1, Y2 ... Y(M - 2), Y(M - 1), YM, which is the later stage of the first signal input switches 51Y, in corresponding fashion to the Y-axis line bodies. The other end of the second signal input switches 52Y is connected to ground via the shared signal line 54. In other words, the second signal input switches 52Y are provided between ground and one end of the corresponding Y-axis line bodies in corresponding fashion to the Y-axis line bodies. The second signal input switches 52Y are switched on, whereby the second signal input switches 52Y are connected to the Y-axis line bodies selected by the first signal input switches 51Y, and function as a second selection section for forming an input loop coil together with the Y-axis line bodies selected by the first signal input switches 51Y.

In the present embodiment, the Y-axis line bodies Y1, Y2, Y4, Y6 ... Y (M - 1), YM of the Y-axis line bodies Y1 ... YM are used as Y-axis line bodies for forming input loop coils in an electromagnetic induction scheme. On the other hand, the remaining Y-axis line bodies, i.e., the Y-axis line bodies Y3, Y5, Y7 ... Y (M - 4), Y (M - 2) are used as Y-axis electrodes in an electrostatic capacitance scheme. Therefore, the second signal input switches 52Y corresponding to the Y-axis line bodies Y1, Y2, Y4, Y6 ... Y (M - 1), YM for forming input loop coils in an electromagnetic induction scheme are switched on in sequential fashion in a predetermined cycle, and the second signal input switches 52Y corresponding to the Y-axis line bodies Y3, Y5, Y7 ... Y (M - 4), Y (M - 2) are constantly off.

In other words, the first and second signal input switches 51Y, 52Y corresponding to the Y-axis line bodies Y1, Y2, Y4, Y6 ... Y(M - 1), YM to be used as input loop coils are both switched on in sequential fashion in a predetermined cycle. On the other hand, the first signal input switches 51Y corresponding to the Y-axis line bodies Y3, Y5, Y7 ... Y(M - 4), Y(M - 2) to be used as Y-axis electrodes are switched on in sequential fashion in a predetermined cycle, and the second signal input switches 52Y are constantly off.

### [4. Position detection signal output section 115]

The position detection signal output section is provided to one end side of the plurality of X-axis line bodies constituting the X-axis line section 111, and outputs a position detection signal corresponding to a designated coordinate position when the position designation tool 2 or the fingertip 3 has designated an XY coordinate position of the XY coordinate formation section.

Specifically, the position detection signal output section 115 comprises the third signal input switches 61X, the fourth signal input switches 62X, a shared signal line 63 to which the third signal input switches 61X are connected, a shared signal line 64 to which the second signal input switches 62X are connected, a switch ST3, and an electromagnetic induction signal output circuit 66 having a differential amplification circuit configuration, in the same manner as the position detection signal output section 15 of the first embodiment. The position detection signal output section 115 according to the present embodiment furthermore comprises switches ST4 to ST7, and an electrostatic capacitance signal output circuit 161.

The third signal input switches 61X are connected to one end of the X-axis line bodies X1 ... XN in correspondence to the axis line bodies. These are connected, by way of the shared signal line 63, to the non-inverting input end of the electromagnetic induction signal output circuit 66, which has a differential amplification circuit configuration, via the switch ST3. In other words, the third signal input switches 61X are connected to one end side of the X-axis line bodies and select X-axis line bodies for forming an output loop coil.

In the present embodiment, the X-axis line bodies X1, X2, X4, X6 ... X (N - 1), XN of the X-axis line bodies X1 ... XN are used as the X-axis line bodies for forming input loop coils in an electromagnetic induction scheme. On the other hand, the remaining X-axis line bodies, i.e., the X-axis line bodies X3, X5, X7 ... X (N - 4), X (N - 2) are used as X-axis electrodes in an electrostatic capacitance scheme. The third signal input switches 61X corresponding to the X-axis line bodies X1, X2, X4, X6 ... X (N - 1), XN for forming output loop coils in an electromagnetic induction scheme, and the third signal input switches 61X corresponding to the X-axis line bodies X3, X5, X7 ... X (N - 4), X (N - 2) used as X-axis electrodes in an electrostatic capacitance scheme are both switched on in sequential fashion in a predetermined cycle.

One end of the fourth signal input switches 62X is connected to one end of the X-axis line bodies X1, X2 ... X(N - 2), X(N - 1), XN, which is the later stage of the third signal input switches 61X, in corresponding fashion to the X-axis line bodies. The other end of the fourth signal input switches 62X is connected together with ground to the inversion input end of the electromagnetic induction signal output circuit 66 via the shared signal line 64. In other words, the fourth signal input switches 62X are connected to one end side of the X-axis line bodies and the X-axis line bodies for forming the output loop coils are selected together with the X-axis line bodies selected by the third signal input switches 61X.

In other words, the third signal input switches 61X and the fourth signal input switches 62X functions as an X-axis line body selection unit for selecting at least two X-axis line bodies for forming an input loop coil.

In the present embodiment, the X-axis line bodies X1, X2, X4, X6 ... X(N - 1), XN of the X-axis line bodies X1 ... XN are used as the X-axis line bodies for forming input loop coils in an electromagnetic induction scheme. On the other hand, the remaining X-axis line bodies, i.e., the X-axis line bodies X3, X5, X7 ... X(N - 4), X(N - 2) are used as X-axis electrodes in an electrostatic capacitance scheme. Therefore, the fourth signal input switches 62X corresponding to the X-axis line bodies X1, X2, X4, X6 ... X(N - 1), XN to be formed as output loop coils in an electromagnetic induction scheme are switched on in sequential fashion in a predetermined cycle, and the fourth signal input switches 62X corresponding to the X-axis line bodies X3, X5, X7 ... X(N - 4), X(N - 2) are constantly off.

In other words, the third and fourth signal input switches 61X, 62X corresponding to the X-axis line bodies X1, X2, X4, X6 ... X(N - 1), XN to be used as output loop coils are both switched on in sequential fashion in a predetermined cycle. On the other hand, the third signal input switches 61X corresponding to the Y-axis line bodies X3, X5, X7 ... X(N - 4), X(N - 2) to be used as X-axis electrodes are switched on in sequential fashion in a predetermined cycle, and the fourth signal input switches 62X are constantly off.

### <Operation in the position detection unit 110>

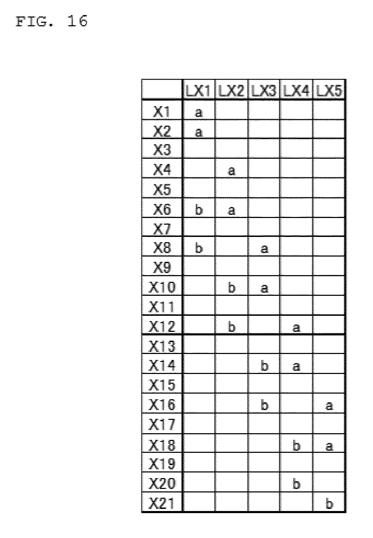

FIGS. 15 and 16 are conceptual views showing a switch management table provided inside the designated-position detection control section 116. The table shown in FIG. 15 is used for controlling which Y-axis line bodies in particular among the Y-axis line bodies Y1 ... YM constituting the Y-axis line section 112 are to be used for forming an input loop coil in the electromagnetic induction scheme, i.e., controlling the on/off operation of the first signal input switches 51Y and the second signal input switches 52Y connected to one end of the Y-axis line bodies. The designated-position detection control section 116 generates the switching signal S10 on the basis of the table, and the drive signal output section 114 having received the switching signal controls the signal input switches 51Y, 52Y to form input loop coils LY1 ... LYK in the electromagnetic induction scheme using one or a combination of a plurality of Y-axis line bodies, and to form Y-axis electrodes in the electrostatic capacitance scheme.

The table shown in FIG. 16 is used for controlling which X-axis line bodies in particular among the X-axis line bodies X1 ... XN constituting the X-axis line section 111 are to be used for forming an output loop coil in the electromagnetic induction scheme, i.e., controlling the on/off operation of the third signal input switches 61X and the fourth signal input switches 62X connected to one end of the X-axis line bodies. The designated-position detection control section 116 generates the switching signal S10 on the basis of the table, and the position detection signal output section 115 having received the switching signal controls the signal input switches 61X, 62X to form output loop coils LX1 ... LXL in the electromagnetic induction scheme using one or a combination of a plurality of X-axis line bodies, to form X-axis electrodes in the electrostatic capacitance scheme.

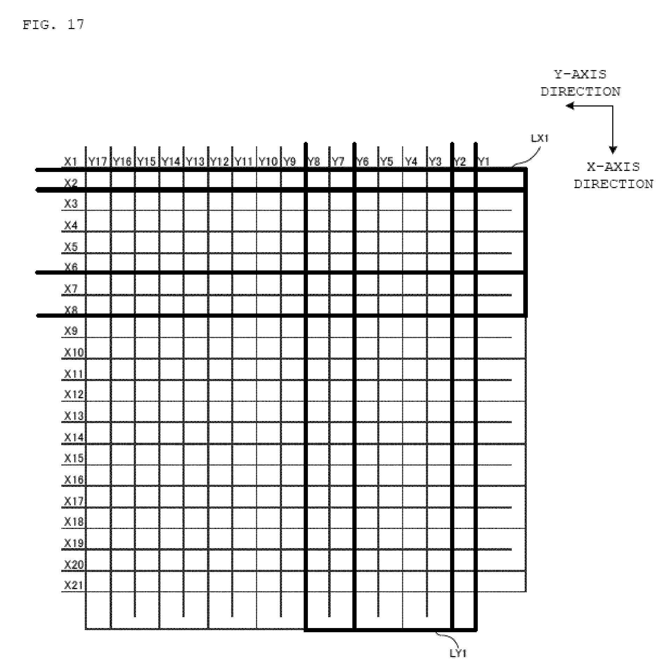

In the example of FIG. 15, 17 Y-axis line bodies constituting the Y-axis line section 112 are shown in the vertical axis direction, and input loop coil no. (LY1 to LYK: LY4 in the example in FIG. 4) formed by the Y-axis line bodies is shown. The first signal input switches 51Y affixed with "a" in the table and disposed in correspondence to one or more Y-axis line bodies are switched on, on the basis of the switching signal S10 received from the designated-position detection control section 116. Also, at the same time, the second signal input switches 52Y affixed with "b" in the table and disposed in correspondence to one or more Y-axis line bodies are switched on, on the basis of the switching signal S10 received from the designated-position detection control section 116.

FIG. 17 is a conceptual view of input loop coils formed as a result of the first and second signal input switches 51Y, 52Y being switched on by the switching signal S10 generated on the basis of the table shown in FIG. 15. Referring to input loop coil no. LY1 in the table of FIG. 15, the Y-axis line bodies Y1 and Y2 are affixed with "a" in the table, and the first signal input switches 51Y1 and 51Y2 corresponding to the Y-axis line body Y1 are switched on. Also, the Y-axis bodies Y6 and Y8 are affixed with "b", and the second signal input switches 52Y6 and 52Y8 corresponding to the Y-axis bodies Y6 and Y8 are switched on. As shown in FIG. 17, an input loop coil LY1 composed of the Y-axis line bodies Y1 and Y2 and the Y-axis bodies Y6 and Y8 is formed thereby. Hereinbelow, LY2, LY3, and LY4 are formed in sequential fashion in the same manner.

Referring to FIG. 15, "a" and "b" are not affixed to the Y-axis line bodies Y3, Y5, Y7, Y9, Y11, Y13, and Y15. In other words, this shows that these Y-axis line bodies function as Y-axis electrodes in an electrostatic capacitance scheme, and the first signal input switches 51Y are switched on in sequential fashion with reference to the switch management table for controlling Y-axis electrodes in an electrostatic capacitance scheme prepared as required. The second signal input switches 52Y3, 52Y5, 52Y7, 52Y9, 52Y11, 52Y13, 52Y15 provided in corresponding fashion to the Y-axis line bodies are off.

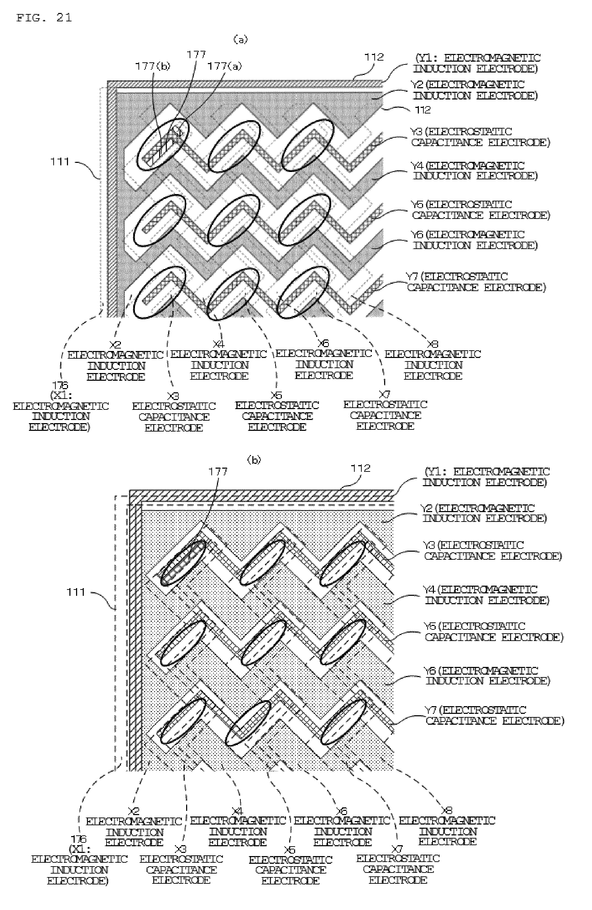

In the example of FIG. 16, 21 X-axis line bodies constituting the X-axis line section 11 are shown in the vertical direction, and output loop coil no. 74 (LX1 ... LXL) formed by the X-axis line bodies is shown. The third signal input switches 61X affixed with "a" in the table and disposed in correspondence to one or more X-axis line bodies are switched on, on the basis of the switching signal S10 received from the designated-position detection control section 116. Also, at the same time, the fourth signal input switches 62X affixed with "b" in the table and disposed in correspondence to one or more X-axis line bodies are switched on, on the basis of the switching signal S10 received from the designated-position detection control section 116.

FIG. 17 is a conceptual view of output loop coils formed as a result of the third and fourth signal input switches 61X, 62X being switched on by the switching signal S10 generated on the basis of the table shown in FIG. 16. Referring to output loop coil no. LX1 in the table of FIG. 16, the X-axis line bodies X1 and X2 are affixed with "a" in the table, and the third signal input switches 61X1, 61X2 corresponding to the X-axis line bodies X1 and X2 are switched on. Also, the X-axis bodies X6 and X8 are affixed with "b", and the fourth signal input switches 62X6, 62X8 corresponding to the X-axis bodies X6 and X8 are switched on. As shown in FIG. 17, an output loop coil LX1 composed of the X-axis line bodies X1 and X2 and the X-axis bodies X6 and X8 is formed thereby. Hereinbelow, LX2, LX3, LX4, and LX5 are formed in sequential fashion in the same manner.

Referring to FIG. 16, "a" and "b" are not affixed to the X-axis line bodies X3, X5, X7, X9, X11, X13, X15, X17, and X19. In other words, this shows that these X-axis line bodies function as X-axis electrodes in an electrostatic capacitance scheme, and the third signal input switches 61X are switched on in sequential fashion with reference to the switch management table for controlling X-axis electrodes in an electrostatic capacitance scheme prepared as required. The fourth signal input switches 62X3, 62X5, 62X7, 62X9, 62X11, 62X13, 62X15, 62X17, and 62X19 provided in corresponding fashion to the X-axis line bodies are off.

In the present embodiment, the drive signal input section 114 switches on the first and second signal input switches in sequence using a reference detection cycle, and thereby generates a drive pulse signal in the Y-axis line section 112 by allowing a drive pulse signal, i.e., a drive input pulse electric current to flow in sequential fashion in the input loop coils LY1, LY2 ... LYK, as shown in FIG. 17. In this state, the user performs a pen-touch operation on the XY coordinate plane of the XY coordinate formation section using the pen-type position designation tool 2 to thereby designate a coordinate position.

At this time, the position designation tool 2 has a resonance circuit composed of an induction coil and a resonance capacitor, and creates a tuning resonance electric current in the induction coil and the resonance capacitor using the magnetic field generated by the input loop coils LY1 ... LYK in the position touched with the pen by the user. An induction voltage is induced in the output loop coils LX1 ... LXL in the position touched by the pen, on the basis of the induction field generated in the induction coil on the basis of tuning resonance electric current.

The position detection signal output section 115 receives a detection voltage, which is based on the induction voltage induced in the output loop coils LX1 ... LXL formed by the third and fourth signal input switches 61X, 62X, in the electromagnetic induction signal output circuit 66, and outputs the detection voltage as a designated-position detection output signal S12. The outputted designated-position detection output signal S12 is sent out to the designated-position detection control section 116 as a position detection output signal S14 via a synchronous wave detection circuit.

On the other hand, a portion of the axis line bodies of all the axis line bodies function as Y-axis electrodes and X-axis electrodes in an electrostatic capacitance scheme as shown in FIG. 18. In other words, the Y-axis line bodies Y3, Y5 ... Y15 functioning as Y-axis electrodes and the X-axis line bodies X3, X5 ... X19 functioning as X-axis electrodes in an electrostatic capacitance scheme are mutually orthogonal to form an XY coordinate system (Xn, Ym), as shown in FIG. 18. An electrostatic field generated by a stray electrostatic capacitance is thereby formed about the intersecting positions of the Y-axis line bodies and the X-axis line bodies.

This electrostatic field has a stray electrostatic capacitance CZ generated substantially uniformly in the XY coordinate system, the stray electrostatic capacitance being formed between two X-axis line bodies X(n - 1) and X(n + 1) as well as two Y-axis line bodies Y(m - 1) and Y(m + 1), which are mutually adjacent so as to face each other about a single point of intersection at the coordinate (Xn, Ym) in the grid space of the XY coordinate system.

When a predetermined position coordinate (Xn, YM) is touched by the fingertip 3 of a user, the total capacitance value of the floating capacitance value is distributed between the X-axis line bodies X(n - 1), Xn, X(n + 1) and the Y-axis line bodies Y(m - 1), Ym, Y(m + 1) at the designated position and in the periphery thereof in the electrostatic field of the XY coordinate system.

When the drive pulse signal S4 is inputted to the Y-axis line bodies Y3, Y5 ... Y15 in this arrangement, a voltage output corresponding to the floating capacitance value is transmitted to the X-axis lines.

When the first signal input switches 51Y3, 51Y5 ... 51Y15 of the drive signal input section 14 are switched on in sequential fashion, a detection output is obtained when the third signal input switches 61X3, 61X5 ... 61X19 of the position detection signal output section 15 are switched on, and the detection output is outputted from the electrostatic capacitance signal output circuit 161 as an electrostatic capacitance detection signal S13 of when the coordinate (Xn, Xm) position has been touch-operated by the fingertip 3 and is sent out to the designated-position detection control section 16 as the position detection output signal S14 via the synchronous wave detection circuit.

Although not particularly shown, in the present embodiment, a plurality of tables having different configurations of the axis line bodies for forming the loop coils and/or configurations of the axis line bodies that function as X- and Y-axis electrodes in an electrostatic capacitance scheme is provided in the same manner as the first embodiment, thereby making it possible to temporarily increase the detection precision of the pen-touch operation or finger touch operation, and to modify the detection speed and/or the detectable range.

### <Configuration of the XY coordinate formation section>

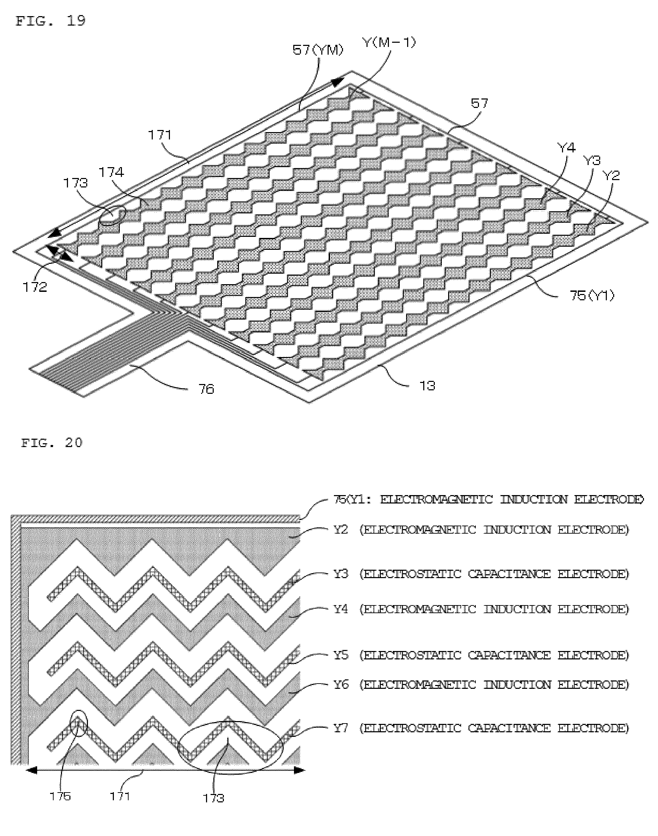

FIG. 19 is a view showing the specific structure of the Y-axis line section 112 constituting the XY coordinate formation section according to the present embodiment. In FIG. 19, the Y-axis line bodies Y1 ... YM constituting the Y-axis line section 112 extend in a rectilinear fashion, and are arranged in parallel on the insulating layer 13 at mutually equidistant intervals. One end of the Y-axis line bodies Y1, Y2, Y4 ... Y (M - 1), YM of the Y-axis line bodies Y1 ... YM is connected to the first and second signal input switches 51Y, 52Y via a sensor connection draw-out section 76. The other ends of the Y-axis line bodies Y1 ... YM short-circuited and are connected to each other via the shared signal line 57.

On the other hand, one end of the remaining Y-axis line bodies of the Y-axis line bodies Y1 ... YM, i.e., the Y-axis line bodies Y3, Y5 ... Y (M - 4), Y (M - 2) is connected to the first and second signal input switches 51Y, 52Y via the sensor connection draw-out section 76, and the other ends are mutually independent axis line bodies that are not connected to the shared signal line 57.

In the present embodiment as well, an external peripheral electrode section 75 may be used as a Y-axis line body in the same manner as in the first embodiment. Therefore, in the example shown in FIG. 19, a portion of the external peripheral electrode functions as the Y-axis line body Y1 and Y-axis line body YM, and furthermore as the shared signal line 57.

In the present embodiment, a portion of the Y-axis line bodies constituting the Y-axis line section 112 is used for forming input loop coils in an electromagnetic induction scheme, and the remaining portion is used as Y-axis electrodes in an electrostatic capacitance scheme. Therefore, the Y-axis line bodies share the configuration of the two long sides along the lengthwise direction 171 and the two short sides connected to the shared signal line 57 or the first and second signal input switches 51Y, 52Y along the crosswise direction 172, but in the present embodiment, the two long sides each have a recess part 173 formed periodically. The Y-axis line bodies thereby form a pattern in which a plurality of rhombus parts or diamond-shaped parts 174 is connected in continuous fashion.

FIG. 20 is an enlarged view showing a portion of the Y-axis line section 112 constituting the XY coordinate formation section according to the present embodiment. In FIG. 20, the external peripheral electrode section 75 is used as a Y-axis line body Y1, i.e., as an electromagnetic induction electrode for forming a loop coil. Arranged in the X-axis line direction mutually parallel to each other are the Y-axis line body Y2 functioning as an electromagnetic induction electrode for forming the loop coil, the Y-axis line body Y3 functioning as a Y-axis electrode in the electrostatic capacitance scheme, the Y-axis line body Y4 functioning as an electromagnetic induction electrode for forming a loop coil, the Y-axis line body Y5 functioning as a Y-axis electrode in the electrostatic capacitance scheme, the Y-axis line body Y6 functioning as an electromagnetic induction electrode for forming a loop coil, and the Y-axis line body Y7 functioning as a Y-axis electrode in the electrostatic capacitance scheme. Excluding the external peripheral electrode section 75, the Y-axis line bodies have Y-axis line bodies that function as electromagnetic induction electrodes for forming loop coils, and Y-axis line bodies for functioning as Y-axis electrodes in the electrostatic capacitance scheme, which are arranged in alternating fashion.

In the drawing shown in FIG. 20, the recesses along the long sides composed of electrodes are formed with a different shape and size than the Y-axis line bodies shown in FIG. 19. In other words, the Y-axis line bodies have acute-angled, right-angled, or obtuse-angled edge parts 175, and are formed in a waveform in which the edge parts 175 having different orientations alternate in continuous fashion, as shown in FIG. 20.

The structure of the X-axis line section 111 will not be described in particular detail, but the configuration is the same except that the axis line bodies extend in a direction orthogonal to the Y-axis line bodies.

FIG. 21(a) is a view showing the axis line patterns when the X-axis line section 111 (not shown) is superimposed on the Y-axis line section 112 shown in FIGS. 19 and 20. As described above, the X-axis line bodies constituting the X-axis line section 111 is configured so as to be orthogonal to the Y-axis line bodies constituting the Y-axis line section 112. Excluding external peripheral electrodes 176, the X-axis line section 111 has X-axis line bodies functioning as electromagnetic induction electrodes in an electromagnetic induction scheme for forming loop coils and X-axis line bodies functioning as X-axis electrodes in an electrostatic capacitance scheme that are arranged in alternating fashion in the same manner as the Y-axis line section 112.

In FIG. 21(a), an area 177 and the like in which electrostatic capacitance electrodes of the Y-axis line body section 112 and electromagnetic induction electrodes of the X-axis line body section are mutually adjacent in the vertical direction. An electrostatic field is formed by the stray electrostatic capacitance about the center of the mutually adjacent areas 177 and the like. In the example in FIG. 21(a), the area 177 has a shape separated into two locations: area 177(a) and 177(b). An electrostatic field is formed by the stray electrostatic capacitance about the center of the area 177(a) and 177 (b) .

In the present embodiment, the shape of the area 117 and the like in which the X-axis line section 111 and the Y-axis line section 112 are mutually adjacent in the vertical direction is described as being a shape separated into two locations as shown in FIG. 21(a), but no limitation is imposed by this shape. For example, a substantially I shape (rectilinear shape) may also be used.

It is possible to obtain the same effect as that obtained by the first embodiment in the terminal device 100 and position detection unit 110 according to the second embodiment of the present invention as well. Furthermore, in the terminal device 100 and position detection unit 110 according to the second embodiment, the axis line bodies functioning as loop coils in an electromagnetic induction scheme and the axis line bodies functioning as axis electrodes in the an electrostatic capacitance scheme are arranged in alternating fashion, thereby making it possible to detect a pen-touch operation and a finger-touch operation in which these two detection schemes are used.

### <Overview of the third embodiment of the present invention>

A third embodiment of the present invention will be described. A description of the components that achieve the same function as the terminal device and the position detection unit according to the first and second embodiments described above will be omitted. The first and second embodiments described above and the third embodiment described below can be combined in part or in whole, as appropriate.

As shown in FIG. 22, the constituent elements constituting the terminal device 200 according to the third embodiment of the present invention are the same constituent elements of the terminal device 1 according to the first embodiment shown in FIG. 2. However, the configuration of a drive signal input section 214 and a position detection signal output section 215, and the switch management table provided to a designated-position detection control section 216 are different as later described. Therefore, the selection operation of the X-axis line bodies X1, ..., XN constituting a X-axis line section 211 and the selection operation of the Y-axis line bodies Y1 ... YM constituting a Y-axis line section 212 are different, and a new function is imparted to the terminal device 200 according to the third embodiment.

In other words, in the terminal device 200 according to the third embodiment, the Y-axis line bodies Y1 ... YM are used in the formation of input loop coils for an electromagnetic induction scheme, and are used as Y-axis electrodes for an electrostatic capacitance scheme in accordance with switching. Similarly, the X-axis line bodies X1 ... XN are used in the formation of output loop coils for an electromagnetic induction scheme, and are used as X-axis electrodes for an electrostatic capacitance scheme in accordance with switching. Therefore, in addition to the first embodiment, the axis line bodies may be used as Y coordinate system electrodes and X coordinate system electrodes in an electrostatic capacitance scheme in accordance with switching.

FIG. 22 is a block view showing the configuration of a terminal device 200 according to the third embodiment of the present invention. In FIG. 22, the terminal device 200 according to the present embodiment comprises at least a position detection unit 210, a central processing unit 20, and a display section 30 as constituent elements thereof.

The central processing unit 20 receives from the designated-position detection control unit 216 a display position detection signal S2 showing a designated position when a user has designated a specific position on the XY display surface of the display section 30 by performing an operation in which the pen-shaped position designation tool 2 is brought into contact with or proximity to the display surface of the display section 30 to perform a pen-touch operation. In the terminal device 200 according to the present embodiment, the central processing unit 20 furthermore receives from the designated-position detection control section 216 a display position detection signal S2 showing a designated position when a user has designated a specific position on the XY display surface of the display section 30 by performing an operation in which the fingertip 3 is brought into contact with or proximity to the display surface of the display section 30 to perform a finger touch operation. The specific details of the position detection unit 210 are later-described.

### <Position detection unit 210>

In the present embodiment, the position detection unit 210 comprises the designated-position detection control section 216; an XY coordinate formation section composed of the X-axis line section 211, the Y-axis line section 212, and the insulating layer 13; a drive signal output section 214; and a position detection signal output section 215.

### [1. Designated-position detection control section 216]

A switch management table (FIG. 15) is provided inside the designated-position detection control section 216, the switch management table being used for: controlling the on/off operation of the first and second signal input switches 51Y, 52Y connected to the Y-axis line bodies 61Y constituting the Y-axis line section 12, and the third and fourth signal input switches 61X, 62X connected to the X-axis line bodies 62X constituting the X-axis line section 11; and generating the switching signal S10 for selecting the axis line bodies used in the formation of a loop coil in an electromagnetic induction scheme or the axis line bodies used as the X-axis and Y-axis electrodes in an electrostatic capacitance scheme. The designated-position detection control section 216 generates the switching signal S10 on the basis of the switch management table, and controls the on/off operation of the switches of the first and second signal input switches 51Y, 52Y and the third and fourth signal input switches 61X, 62X.

The designated-position detection control section 216 receives from the position detection unit 210 a mode selection signal S3 for selecting whether to have the position detection unit 210 perform position detection by the electromagnetic induction scheme (electromagnetic induction mode) or perform position detection by the electrostatic capacitance scheme (electrostatic capacitance mode). On the basis thereof, a mode selection signal S5 is send out to the drive signal input section 214 and the position detection signal output section 215, the mode selection signal being used for controlling Y-axis line mode switches 251Y1 ... 251YM provided in corresponding fashion to the Y-axis line bodies in a Y-axis line mode switch section 251 provided inside the drive signal input section 214, and X-axis line mode switches 262X1 ... 262XN provided in corresponding fashion to the X-axis line bodies in an X-axis line mode switch section 262 provided inside the position detection signal output section 215

Other than the above, the function and configuration are the same as those of the designated-position detection control section described in the first and second embodiments.

### [2. X-axis line section 211 and Y-axis line section 212]

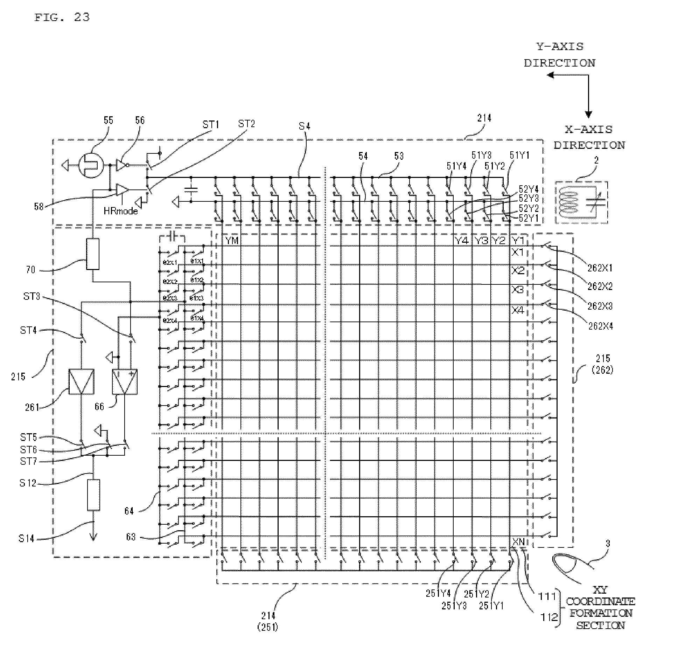

The X-axis line section 211 and the Y-axis line section 212 are composed of N and M number of X-axis line bodies in the same manner as the other embodiments, as shown in FIG. 23, and are arranged to as to be mutually orthogonal. On the other hand, in the present embodiment, the other end side which is not connected to the third and fourth signal input switches 61X, 62X of the X-axis line bodies X1 ... XN constituting the X-axis line bodies is connected to the X-axis line mode switches 262X1 ... 262XN. Similarly, the other end side which is not connected to the first and second signal input switches 51Y, 52Y of the Y-axis line bodies Y1 ... YM constituting the Y-axis line bodies is connected to the Y-axis line mode switches 251Y1 ... 251YM.

In other words, for example, when the Y-axis line body mode switches connected to the other end of the Y-axis line bodies Y1 ... YM have been switched on, the position detection unit 210 is caused to function in the electromagnetic induction mode. When the Y-axis line body mode switches connected to the other end of the Y-axis line bodies Y1 ... YM have not been switched on, the position detection unit 210 is caused to function in the electrostatic capacitance mode.

### [3. Drive signal input section 214]

The drive signal input section 214 is provided to one end side of the plurality of Y-axis line bodies constituting the Y-axis line section 212, and a drive pulse signal S4 generated by the drive signal drive signal input section 214 is inputted to the one end side of the plurality of Y-axis line bodies.

Specifically, the drive signal input section 214 has a Y-axis line mode switch section 251 in addition to the constituent elements and functions provided by the drive signal input section according to the first and second embodiments. The Y-axis line mode switch section 251 comprises Y-axis line mode switches 251Y1 ... 251YM connected to the other end side of the Y-axis line bodies Y1 ... YM, i.e., to the side opposite of that to which the first and second signal input switches 51Y, 52Y are connected, in corresponding fashion to the Y-axis line bodies Y1 ... YM.

The drive signal input section 214 controls the on-operation of the Y-axis line mode switches 251Y1 ... 251YM constituting the Y-axis line mode switch section 251 on the basis of the mode selection signal S5 received from the designated-position detection control section 216.

Specifically, when the electromagnetic induction mode has been designated by the mode selection signal S5, the Y-axis line mode switches 251Y1 ... 251YM are switched on, and the other end sides of the Y-axis line bodies Y1 ... YM are connected to each other. On the other hand, when the electrostatic capacitance mode has been designated by the mode selection signal S5, the Y-axis line mode switches 251Y1 ... 251YM are switched off, and the other end sides of the Y-axis line bodies Y1 ... YM are not connected to each other and are placed in an independent arrangement.

### [4. Position detection signal output section 215]

The position detection signal output section 215 is provided to one end side of the plurality of X-axis line bodies constituting the X-axis line section 211, and outputs a position detection signal corresponding to a designated coordinate position when the position designation tool 2 or the fingertip 3 has designated an XY coordinate position of the XY coordinate formation section.

Specifically, the position detection signal output section 215 has an X-axis line mode switch section 262 in addition to the constituent elements and functions provided by the position detection signal output section according to the first and second embodiments. The X-axis line mode switch section 262 comprises X-axis line mode switches 262X1 ... 262XN connected to the other end side of the X-axis line bodies X1 ... XN, i.e., to the side opposite of that to which the first and second signal input switches 61X, 62X are connected, in corresponding fashion to the X-axis line bodies X1 ... XN.

The position detection signal output section 215 controls the on-operation of the X-axis line mode switches 262X1 ... 262XN constituting the X-axis line mode switch section 262 on the basis of the mode selection signal S5 received from the designated-position detection control section 216.

Specifically, when the electromagnetic induction mode has been designated by the mode selection signal S5, the X-axis line mode switches 262X1 ... 262XN are switched on, and the other end sides of the X-axis line bodies X1 ... XN are connected to each other. On the other hand, when the electrostatic capacitance mode has been designated by the mode selection signal S5, the X-axis line mode switches 262X1 ... 262XN are switched off, and the other end sides of the X-axis line bodies X1 ... XN are not connected to each other and are placed in an independent arrangement.

### <Operation of the position detection unit 210>

As described above, the position detection unit 210 in the present embodiment can be switched between the electromagnetic induction mode and the electrostatic capacitance mode on the basis of the mode selection signal S5.

### [1. Electromagnetic induction mode]

The designated-position detection control section 216 receives the mode selection signal S3 from the central processing unit 20. The central processing unit 20 determines which mode to select in accordance with the type of application to be executed by the terminal device 200, and generates the mode selection signal S3 in correspondence thereto. The designated-position detection control section 216 having received the mode selection signal sends out the mode selection signal S5 to the drive signal input section 214 and the position detection signal output section 215.

First, the drive signal input section 214 having received the mode selection signal S5 controls the on-operation of the Y-axis line mode switches 251Y1 ... 251YM disposed in the Y-axis line mode switch section 251, which is located in the drive signal input section 214. Specifically, the electromagnetic induction mode has been selected by the central processing unit, and the Y-axis line mode switches 251Y1 ... 251YM have therefore been switched on. At this time, the other end sides of the Y-axis line bodies Y1 ... YM are connected via the Y-axis line mode switches 251Y1 ... 251YM.

Next, the designated-position detection control section 216 selects a switch management table for determining the Y-axis line bodies to be used on the basis of the mode selection signal S3 generated by the central processing unit 20. In this example, the electromagnetic induction mode is currently selected, and therefore a switch management table prepared for the electromagnetic induction mode is selected. The designated-position detection control section 216 generates a switching signal S10 with reference to the switch management table. The on-operation of the first and second signal input switches 51Y, 52Y disposed in the drive signal input section 14 is controlled on the basis of the switching signal S10 to thereby control the formation of input loop coils.

Similarly, the designated-position detection control section 216 controls the on-operation of the third and fourth signal input switches 61X, 62X disposed in the position detection signal output section 215 on the basis of the switching signal S10 generated on the basis of the switch management table to thereby control the formation of output loop coils.

The configuration of the switch management table in the electromagnetic induction mode and the processing carried out until the position detection output signal S14 is generated by the loop coils thus formed are performed in the same manner as the first embodiment.

### [2. Electrostatic capacitance mode]

The designated-position detection control section 216 receives the mode selection signal S3 from the central processing unit 20. The central processing unit 20 determines which mode to select in accordance with the type of application to be executed by the terminal device 200, and generates the mode selection signal S3 in correspondence thereto. The designated-position detection control section 216 having received the mode selection signal sends out the mode selection signal S5 to the drive signal input section 214 and the position detection signal output section 215.

First, the drive signal input section 214 having received the mode selection signal S5 switches off the Y-axis line mode switches 251Y1 ... 251YM disposed in the Y-axis line mode switch section 251, which is located in the drive signal input section 214. Specifically, the electrostatic capacitance mode has been selected by the central processing unit, and the Y-axis line mode switches 251Y1 ... 251YM have therefore been switched off. At this time, the other end sides of the Y-axis line bodies Y1 ... YM are no longer connected to each other and each form an independent axis line body.

Next, the designated-position detection control section 216 selects a switch management table for determining the Y-axis line bodies to be used in the electrostatic capacitance mode on the basis of the mode selection signal S3 generated by the central processing unit 20. In this example, the electrostatic capacitance mode is currently selected, and therefore a switch management table prepared for the electrostatic capacitance mode is selected. The designated-position detection control section 216 generates a switching signal S10 with reference to the switch management table. The on-operation of the first signal input switches 51Y disposed in the drive signal input section 14 is controlled on the basis of the switching signal S10 to thereby sequentially switch the Y-axis line bodies to which the drive pulse signal (voltage) is inputted. In the electrostatic capacitance mode, the second signal input switches 52Y are in a constantly off state.

Similarly, the position detection signal output section 215 having received the mode selection signal S5 switches off the X-axis line mode switches 262X1 ... 262XN disposed in the X-axis line mode switch section 262, which is located in the position detection signal output section 215. Specifically, the electrostatic capacitance mode has been selected by the central processing unit, and the X-axis line mode switches 262X1 ... 262XN have therefore been switched off. Therefore, the other end parts of the X-axis line bodies X1 ... XN are no longer connected to each other and each form an independent axis line body.

Next, the designated-position detection control section 216 selects a switch management table for determining the X-axis line bodies to be used in the electrostatic capacitance mode on the basis of the mode selection signal S3 generated by the central processing unit 20. In this example, the electrostatic capacitance mode is currently selected, and therefore a switch management table prepared for the electrostatic capacitance mode is selected. The designated-position detection control section 216 generates a switching signal S10 with reference to the switch management table. The third signal input switches 61X are sequentially switched on, on the basis of the switching signal S10, whereby a detection output is obtained and the designated-position detection signal S14 is generated.

The processing up to generation of the designated-position detection signal S14 in the electrostatic capacitance mode is the same as the processing in the second embodiment. Although not shown in particular, in relation to the switch management table of the electrostatic capacitance mode, the timing for switching on the first and third signal input switches 51Y, 61X is stipulated in correlation with each of the Y-axis line bodies and the X-axis line bodies.

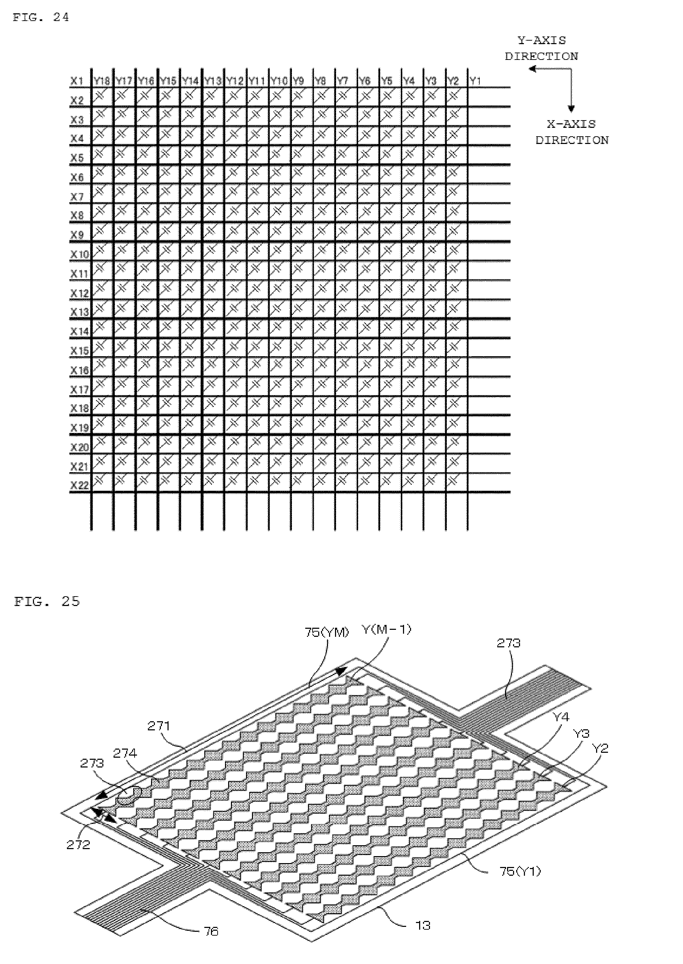

FIG. 24 is a view showing an example of the case in which the axis line bodies function as Y-axis electrodes and X-axis electrodes in the electrostatic capacitance mode. In FIG. 24, all of the axis line bodies are used as Y-axis electrodes and X-axis electrodes. Therefore, an electrostatic field produced by a stray electrostatic capacitance is thereby formed about the intersecting positions of the Y-axis line bodies and the X-axis line bodies.

In other words, when a drive pulse signal (voltage) S4 is inputted to the Y-axis line bodies Y1 ... YM, the voltage output in relation to the stray electrostatic capacitance value is transmitted to the X-axis lines. At this time, the fingertip 3 of the user makes contact with or is brought into proximity to the XY coordinate plane, whereby a detection output is obtained on the basis of the varying voltage and the contacted or proximal coordinate (Xn, Ym) is designated.

### <Configuration of the XY coordinate formation section>

FIG. 25 is a view showing the specific structure of the Y-axis line section 212 constituting the XY coordinate formation section according to the present embodiment. In FIG. 25, the Y-axis line bodies Y1 ... YM constituting the X-axis line section 212 extend in a rectilinear fashion, and are arranged in parallel on the insulating layer 13 at mutually equidistant intervals. On end of the Y-axis line bodies Y1 ... YM is connected to the first and second signal input switches 51Y, 52Y via a sensor connection draw-out section 76. The other ends of the Y-axis line bodies are connected to the Y-axis line mode switches 251Y1 ... 251YM, respectively, via a sensor connection draw-out section 273.

In the present embodiment as well, an external peripheral electrode section 75 may be used as a Y-axis line body in the same manner as in the other embodiments. Therefore, a portion of the external peripheral electrode functions as the Y-axis line body Y1 and Y-axis line body YM in the example shown in FIG. 25.

In the present embodiment, the Y-axis line bodies constituting the Y-axis line section 212 are used for forming Y-axis electrodes in an electrostatic capacitance scheme in accordance with the mode selection. Therefore, the Y-axis line bodies share the configuration of the two long sides along the lengthwise direction 271 and the two short sides connected to the Y-axis line mode switch section 251 or the first and second signal input switches 51Y, 52Y along the crosswise direction 272, but in the present embodiment, the two long sides each have a recess part formed periodically. The Y-axis line bodies thereby form a pattern in which a plurality of rhombus parts or diamond-shaped parts 174 is connected in continuous fashion.

It is possible to obtain the same effect as that obtained by the other embodiments in the terminal device 200 and position detection unit 210 according to the third embodiment of the present invention as well. Furthermore, in the terminal device 200 and position detection unit 210 according to the third embodiment, it is possible to select whether the position detection unit is caused to function in the electromagnetic induction mode or is caused to function in the electrostatic capacitance mode. It is furthermore possible to select and use, as appropriate, whether the position detection unit 210 is to be caused to function in the electromagnetic induction mode or in the electrostatic capacitance mode in accordance with the current state of usage of the terminal device 200 (in accordance with the type of application being executed).

The selection of such a mode is carried out in the same manner as International Patent Application PCT/JP2013/007081. Therefore, the content disclosed in International Patent Application PCT/JP2013/007081 is incorporated by reference in the entirety thereof in the present specification.

### Key

- 1: Terminal device
- 10: Position detection unit
- 11: X-axis line section
- 12: Y-axis line section
- 14: Drive signal input section
- 15: Position detection signal output section
- 16: Designated position detection control section
- 20: Central processing unit
- 30: Display section

## Claims

1. A position detection unit comprising:
an XY coordinate formation section having a configuration in which a plurality of X-axis line bodies composed of line bodies and a plurality of Y-axis line bodies composed of line bodies are caused to intersect each other;
a drive signal input section for inputting drive input signals to one end side of the plurality of Y-axis line bodies, the drive signal input section being provided to one end side of the plurality of Y-axis line bodies; and
a position detection signal output section for outputting a position detection signal corresponding to a designated coordinate position if a position designation tool has designated an XY coordinate position of the XY coordinate formation section, the position detection signal output section being provided to one end side of the plurality of X-axis line bodies; wherein
the plurality of Y-axis line bodies has one end connected to the drive signal input section and another end short-circuited; and
the drive signal input section comprises a Y-axis line body selection section for selecting at least two Y-axis line bodies for forming an input loop coil from the plurality of Y-axis line bodies.

2. The position detection unit according to Claim 1, wherein the Y-axis line body selection section comprises a first selection section for selecting at least one Y-axis line body to which the drive input signal is inputted from the plurality of Y-axis line bodies, and a second selection section for selecting at least one Y-axis line body for forming an input loop coil together with the Y-axis line body selected by the first selection section, from the plurality of Y-axis line bodies excluding the Y-axis line body selected by the first selection section.

3. The position detection unit according to Claim 1 or 2, wherein the drive signal input section forms an input loop coil different from the input loop coil by a combination of Y-axis line bodies different from the at least two Y-axis line bodies that form an input loop coil formed by the Y-axis line selection section.

4. The position detection unit according to any of Claims 1 to 3, wherein
the plurality of X-axis line bodies is connected at one end to the position detection signal output section, and the other end is short-circuited, and
the position detection signal output section comprises an X-axis line body selection section for selecting at least two X-axis line bodies for forming an output loop coil from the plurality of X-axis line bodies.

5. The position detection unit according to Claim 4, wherein the position detection unit transmits an input signal inputted from the input loop coil to the output loop coil via the position designation tool if the position designation tool has designated an XY coordinate position of the XY coordinate formation section, and thereby outputs the position detection signal from the position detection signal output unit.

6. The position detection unit according to Claim 1, wherein the drive signal input section sequentially switches, in predetermined cycles, at least two Y-axis line bodies selected by the Y-axis line body selection section.

7. The position detection unit according to Claim 1, wherein the position detection unit comprises a designated-position detection control section for sending to the drive signal input section a switching signal for selecting at least two Y-axis line bodies for forming the input loop coil.

8. The position detection unit according to Claim 7, wherein the designated-position detection control section generates the switching signal on the basis of a table in which at least two Y-axis line bodies for forming the input loop coil are stored in advance.

9. The position detection unit according to Claim 8, wherein the position detection unit has a plurality of tables having mutually different combinations of at least two Y-axis line bodies for forming the input loop coil.

10. The position detection unit according to Claim 4, wherein, in addition to position detection by an electromagnetic induction scheme in which an input signal inputted by the input loop coil is transmitted to an output loop coil via a position designation tool to thereby output the position detection signal, the position detection unit is capable of position detection by an electrostatic capacitance scheme for outputting the position detection signal on the basis of variation in a floating capacitance produced between the plurality of Y-axis line bodies and the plurality of X-axis line bodies.

11. The position detection unit according to Claim 10, wherein the position detection unit uses at least two X-axis line bodies and at least two Y-axis line bodies from among the plurality of X-axis line bodies and the plurality of Y-axis line bodies constituting the XY coordinate formation section as an X-axis electrode and a Y-axis electrode in an electrostatic capacitance scheme when position detection is carried out by the electrostatic capacitance scheme in the position detection unit.

12. A terminal device comprising:
the position detection unit according to any of Claims 1 to 11; and
a central processing unit for processing information on the basis of a position detection signal outputted from the position detection unit.
